# EUROPEAN PATENT SPECIFICATION

(11) **EP 2 584 497 B1**
(45) Date of publication and mention of the grant of the patent: **23.07.2014**
(21) Application number: 11186157.1
(22) Date of filing: 21.10.2011
(51) Int. Cl.: G06K 13/08, G06K 13/067

(54) **Mechanism for facilitating correct card insertion in electronic devices**
Mechanismus zur Ermöglichung des korrekten Einführens einer Karte in elektronische Vorrichtungen
Mécanisme pour faciliter l'insertion correcte de cartes dans des dispositifs électroniques

(43) Date of publication of application: 24.04.2013
(73) Proprietor: BlackBerry Limited, Waterloo, ON N2K 0A7 (CA)
(72) Inventor: Simpson, James Aldo, Waterloo, Ontario N2L 5K8 (CA); Bos, Jeffrey Charles, Waterloo, Ontario N2L 3W8 (CA)
(74) Representative: Noble, Nicholas

(56) References cited:
- EP-A1- 2 323 068
- JP-A- 2000 048 555
- US-B1- 6 511 350

## Description

### BACKGROUND

The present disclosure relates generally to handheld device technologies and, more particularly, to a mechanism for facilitating correct card insertion, such as memory cards, in electronic devices.

Numerous types of handheld electronic devices are known. Examples of such handheld electronic devices include, for instance, personal data assistants (PDAs), handheld computers, two-way pagers, cellular telephones, smart phones, digital cameras, and the like. While many handheld electronic devices also feature wireless communication capability, other handheld electronic devices are stand-alone devices that are functional without communication with other devices. In general, handheld electronic devices are intended to be portable, and thus are of a relatively compact configuration in which keys and other input structures often perform multiple functions under certain circumstances or may otherwise have multiple aspects or features assigned thereto. With advances in technology, handheld electronic devices are built to have progressively smaller form factors yet have progressively greater numbers of applications and features resident thereon.

Many handheld electronic devices incorporate smart cards therein. A smart card may contain electronic memory, and possibly an embedded integrated circuit (IC). One specific type of smart card is a subscriber identity module (SIM) card, which may be used, for example, in a digital or cellular wireless communication device to encrypt voice and data transmissions. A SIM card may also store data about the device user so that a digital or cellular network can identify and authenticate the user when the network is accessed. Additionally, a SIM card may be used to store the user's personal settings (such as phone numbers, display settings, ring tone settings, etc.).

Typically, handheld electronic devices are designed such that a SIM card is removable by a user. Thus, multiple SIM cards may be swapped into a single handheld electronic device and/or a single SIM card can be swapped between multiple handheld electronic devices. For example, a user may employ a single handheld electronic device for both business and personal communication. Accordingly, a user can assemble (i.e., insert) a first SIM card containing the user's business settings and/or data into the handheld electronic device when conducting a business transaction (e.g., a phone call). After finishing the business transaction, the user can disassemble (i.e., remove) the first SIM card and assemble a second SIM card containing the user's personal settings and/or data into the handheld electronic device before conducting a personal transaction.

Due to the reduced size of handheld electronic devices and SIM cards, however, assembly and disassembly of the SIM cards can be problematic. During assembly, for example, a user may not be able to properly align the SIM card within the handheld electronic device's SIM cardholder frame thus making proper seating of the SIM card difficult if not impossible. During disassembly, a user may not be able to easily grasp the SIM card after it has been unseated from the SIM cardholder frame. Thus, the user may be forced to flip over the handheld electronic device so that the SIM card falls away from the device, which increases the risk that the SIM card will be dropped and damaged.

The invention is set out in the claims and embodiments of the invention are described herein.

JP 2000 048 555 discloses a prior art slot mechanism for an electronic device adapted to receive a card.

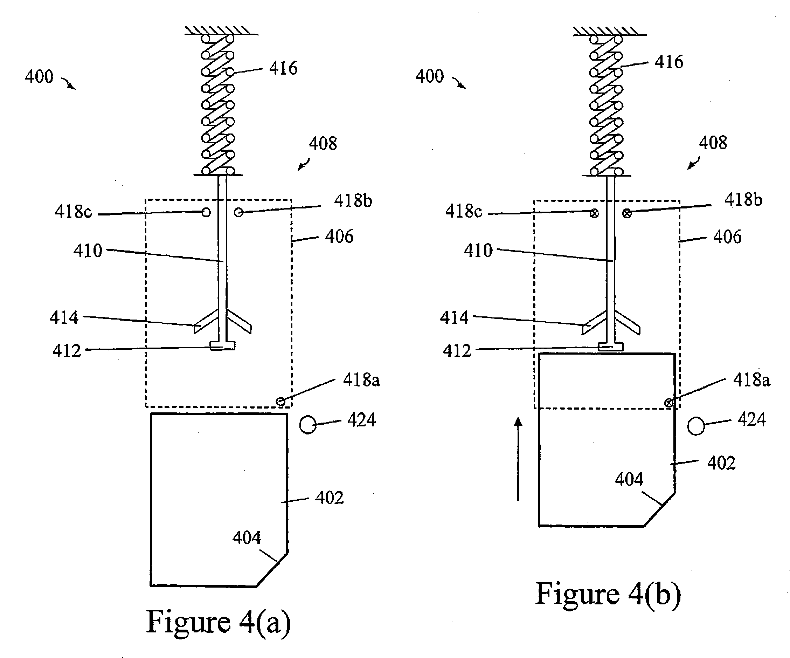

Example memory card slot mechanisms which are useful for understanding the invention are provided in Figures 4(a)-4(n), 6(a)-6(n), and 7(a)-7(n) and the associated description text.

### BRIEF DESCRIPTION OF THE DRAWINGS

For a more complete understanding of this disclosure, reference is now made to the following brief description, taken in connection with the accompanying drawings and detailed description, wherein like reference numerals represent like parts:
Figure 1 is a perspective view of an example of a handheld electronic device suitable for use in accordance with the present disclosure;
Figure 2 is a perspective view of a back side of the handheld electronic device of Figure 1;
Figures 3(a) through 3(k) are a series of schematic diagrams illustrating a first exemplary embodiment of a memory card slot mechanism for electronic devices;
Figures 4(a) through 4(n) are a series of schematic diagrams illustrating an example of a memory card slot mechanism for electronic devices;
Figures 5(a) through 5(I) are a series of schematic diagrams illustrating another exemplary embodiment of a memory card slot mechanism for electronic devices;
Figures 6(a) through 6(p) are a series of schematic diagrams illustrating a further example of a memory card slot mechanism for electronic devices; and
Figures 7(a) through 7(k) are a series of schematic diagrams illustrating a yet further example of a memory card slot mechanism for electronic devices.

### DETAILED DESCRIPTION

Existing card slot designs (e.g., for SIM cards) may allow for the card to be inserted into an electronic device in an incorrect orientation. In this case, a device owner may not become aware that the card was inserted incorrectly until after device power up, and upon receiving an error indication or an inability to register with a network, for example. This in turn may frustrate the owner and lead to an unsatisfactory "out-of-box" experience.

One common conventional design feature is to provide a pictorial image that displays the proper orientation of the card relative to a receiving slot adjacent thereto. Alternatively, a card slot may include a securing fastener over a portion of the opening such that the card is physically held in place once inserted therein. If inserted improperly, the card may slightly bulge out of the card slot, which could indicate improper insertion. Another slot design incorporates the use of a sleeve into which the owner inserts the card. Although insertion of the card into the sleeve in an incorrect orientation will not allow the sleeve to be closed and locked, it is still possible to insert the card into the sleeve in a correct orientation and the sleeve may still fail to close and lock. This is due to the card not precisely aligning with the contours of the sleeve.

Still another conventional design involves the use of a memory card carrier that receives the memory card and is in turn inserted into a slot of the electronic device. Although it is difficult to improperly insert a memory card within the card carrier, it may be difficult to initially locate and remove the card carrier from the slot. Moreover, a purchaser of a new device could incorrectly assume that the card carrier is a memory card placeholder and simply discard the carrier.

In view of the above, disclosed herein are various embodiments of a mechanism for facilitating correct memory card insertion in electronic devices, such as for a memory card. It should be appreciated that the term "card" as described herein may refer to a memory card, such as a SIM card, or other type of electronic card (e.g., PCMCIA). For ease of description, the term "memory card" is used hereinafter. In embodiments described herein, card slot designs are provided for both landscape and portrait card insertion, as well as for a card notch portion either inserted first or last. As a result, correct card insertion results in the memory card sliding fully into the slot without any resistance from the device. Conversely, incorrect card insertion results in either immediate resistance to prevent the card from being fully inserted into the slot or alternatively ejecting the card after complete insertion.

It will be appreciated that for simplicity and clarity of illustration, where appropriate, reference numerals have been repeated among the different figures to indicate corresponding or analogous elements. In addition, numerous specific details are set forth in order to provide a thorough understanding of the embodiments described herein. However, it will be understood by those of ordinary skill in the art that the embodiments described herein can be practiced without these specific details. In other instances, methods, procedures and components have not been described in detail so as not to obscure the related relevant feature(s) being described. Also, the description is not to be considered as limiting the scope of the embodiments described herein.

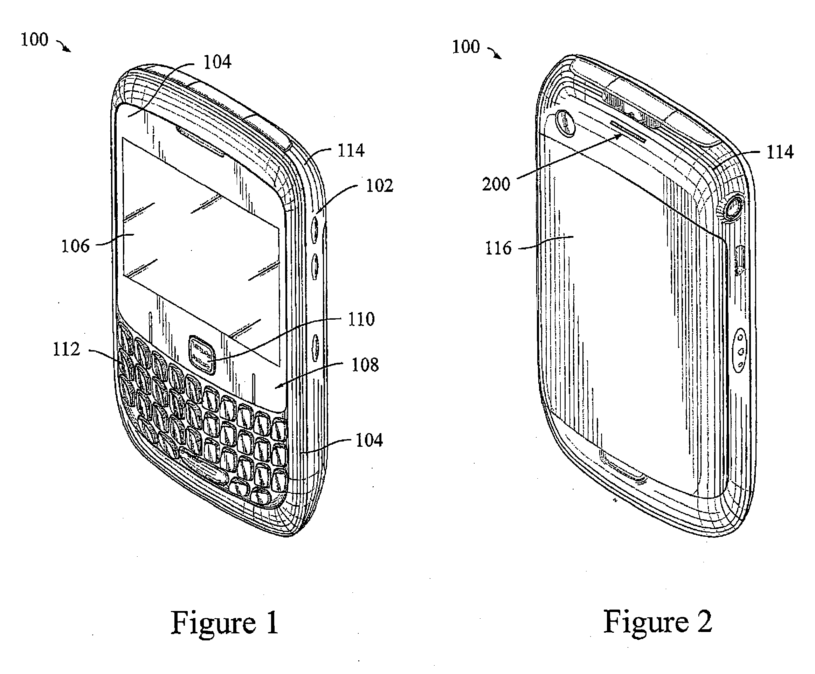

Referring initially to Figures 1 and 2, an example of a handheld electronic device 100 suitable for use in accordance with the present disclosure is shown. As particularly shown in Figure 1, the handheld electronic device 100 may include a housing 102 that protects the internal components of the device, such as a microprocessor, printed circuit board and other components (not shown), as known in the art. A front face 104 of the device 100 includes a display 106, a navigation key panel 108, a navigation device (such as an optical navigation module, as shown, or a trackball, trackpad, or joystick, for example) 110, and a keyboard 112, which can include a plurality of keys arranged in a keyboard layout and having character indicia thereon. The keyboard 112 can be a physical keyboard with actuatable keys, as shown, or it can be a virtual keyboard presented on a touch screen display. It is appreciated that the device 100 can include additional or fewer external components, such as side buttons, a camera, a USB port, and the like, and the device 100 is not limited to the features disclosed herein.

As particularly shown in Figure 2, a back face 114 of the device 100 includes a back cover or battery door 116 configured to enclose a battery (not shown) of the device. The back cover 116 may be removably attached to the back face 114 by a plurality of hooks/tabs and mating or inter-fitting corresponding notches/openings. More specifically, the back cover 116 may be "snap-fit" into the back face 114, although it is appreciated that alternative structures for securing the back cover to the back face may be appropriate, such as a rail/groove structure or a tab/slot structure, for example. As also shown in Figure 2, a memory card slot mechanism 200 is provided in the back face 114 of the electronic device so as to receive a memory card (e.g., a SIM card) therein, embodiments of which will be described in further detail below. However, it will be appreciated that the possible locations or orientations of the memory card slot mechanism 200 with respect to the electronic device 100 are not so limited as depicted in the Figures, and that other locations are also possible.

It will also be understood that the components required for mobile communication device operation (or, more generally, for electronic device operation) are not fully shown in Figures 1 and 2 or described herein as they are not material to the understanding of the method and apparatus for providing an assembly for housing a memory card for a mobile communication device.

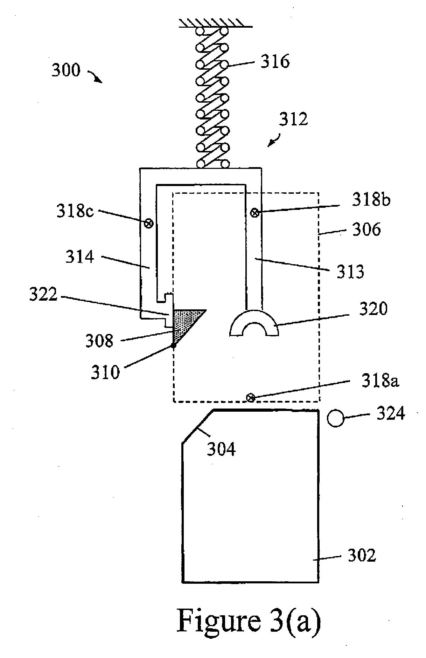

Referring generally now to Figures 3(a) through 3(k), there is shown a series of schematic diagrams illustrating a first exemplary embodiment of a memory card slot mechanism 300 for electronic devices (such as the device 100 shown in Figures 1 and 2). In this embodiment, the slot mechanism 300 has a portrait configuration with respect to a rectangular shaped memory card 302 having a notched edge 304 (hereinafter referred to as a "notch"), wherein a correct orientation of the memory card 302 when inserted into a slot portion 306 (hereinafter referred to as a "slot") of the slot mechanism 300 has the notch side inserted first.

As more particularly shown in Figure 3 (a), the slot mechanism 300 further includes a triangular shaped tab 308 that protrudes into an interior of the slot 306. The specific position and shape of the tab 308 may be tailored in accordance with the memory card geometry. The tab 308 is pivotally attached at a corner thereof by a torsion spring 310

(having a longitudinal axis running into the figure), which biases the tab 308 to an interior position shown in Figure 3(a). A card release mechanism, shown generally at 312, includes a first arm 313 disposed within the interior of the slot 306 and a second arm 314 disposed exterior to the slot 306. The first and second arms 313, 314 are biased in a downward orientation with respect to Figure 3(a) by a biasing spring 316.

As further shown in Figure 3(a), the slot mechanism 300 additionally includes three locking pins; a primary pin 318a located at the front of the slot 306, and two secondary pins 318b, 318c, mechanically interlocked with pin 318a. Pin 318b is located at a back of the slot 306, while pin 318c is located exterior to the slot 306. The three locking pins are spring loaded and require very little force to become depressed. As depicted in the figures, where the pins are marked with an "x," they are in a depressed position with respect to the slot 306. That is, the pins do not extend within the slot 306 itself. However, where the pins are not marked with an "x," they are in a released position and the longitudinal axes thereof extend at least partially into the slot 306. Thus, prior to memory card insertion, secondary pins 318b and 318c are held in a depressed position by first and second arms 313, 314, respectively, causing primary pin 318a to also be held in a depressed position. As will be explained in further detail below, the first arm 313 includes a c-shaped post 320 disposed at an end thereof opposite the biasing spring 316, while the second arm 314 includes a door 322 disposed at an end thereof opposite the biasing spring 316. A release button 324 may also be provided as one embodiment of a card release mechanism, wherein the release button 324 is mechanically interlocked with the locking pins 318a, 318b, 318c.

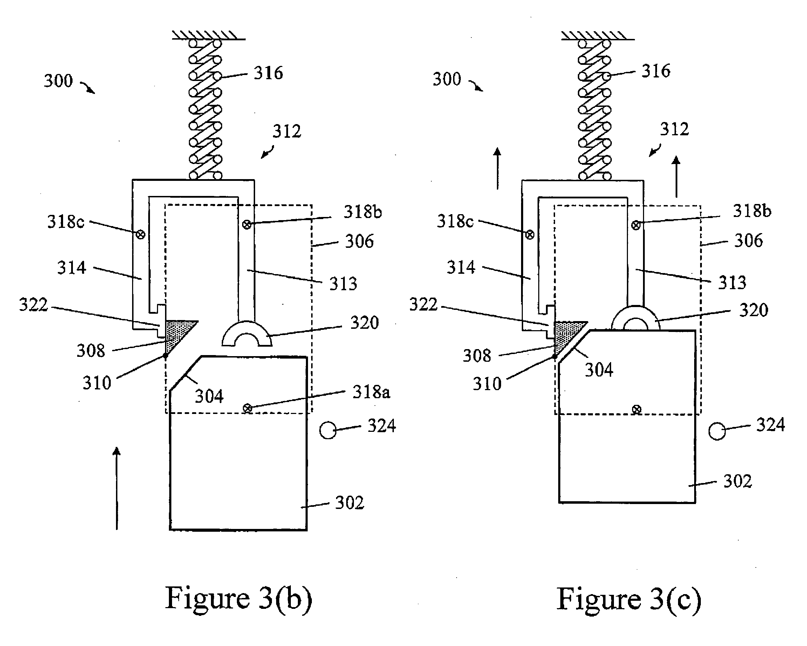

Figures 3(b) through 3(e) illustrate a sequence in which the memory card 302 is inserted into the slot 306 in the correct orientation. That is, the notch 304 is aligned to the tab 308 biased within the slot 306. When the card 302 is initially inserted into the card slot 306 as shown in Figure 3(b), a leading edge of the card 302 causes the primary locking pin 318a to become depressed and forced out of the slot 306 (into the page of the figure). This action may be facilitated by any manner known to one skilled in the art, such as by having a pin structure where the top of the pin has a beveled or slanted surface such that the edge of the card would tend to initially "ride" up the surface of the pin and begin to force it in a downward direction. As the card 302 moves further within the interior of the slot 306 as shown in Figure 3(c), the location of the tab 308 is such that it does not yet make contact with the notch 304. This in turn allows the leading edge of the card 302 to come into contact with the c-shaped post 320, and begins to move the card release mechanism 312 in an upward direction (i.e., toward the back of the slot 306) against the bias of the biasing spring 316.

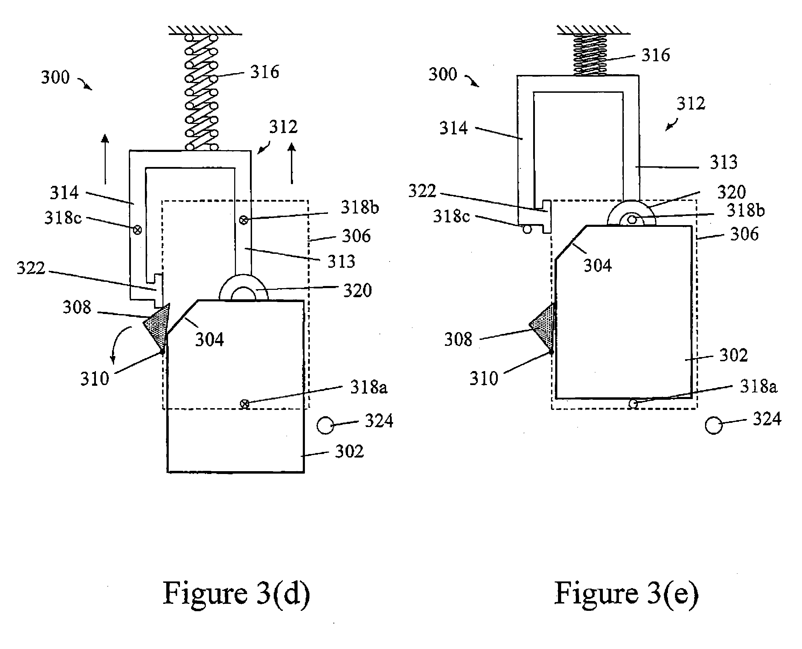

As then shown in Figure 3(d), further insertion of the card 302 now causes the notch 304 to make contact with the tab 308 and cause the tab to pivot outward from the slot 306, against the bias of the torsion spring 310. Notably, the door 322 attached to the second arm 314 has traveled a sufficient distance upward such that the door 322 does not prevent the card 302 from forcing the tab 308 pivotally outward. Eventually, full insertion of the card 302 as shown in Figure 3(e) causes the card release mechanism 312 to clear the area above the locking pins 318b and 318c, while a trailing edge of the card 302 clears the locking pin 318a. As a result, the locking pins 318a, 318b and 318c each spring up within the slot 306, in turn preventing the card release mechanism 312 from ejecting the card 302 once the user has fully inserted the card 3 02.

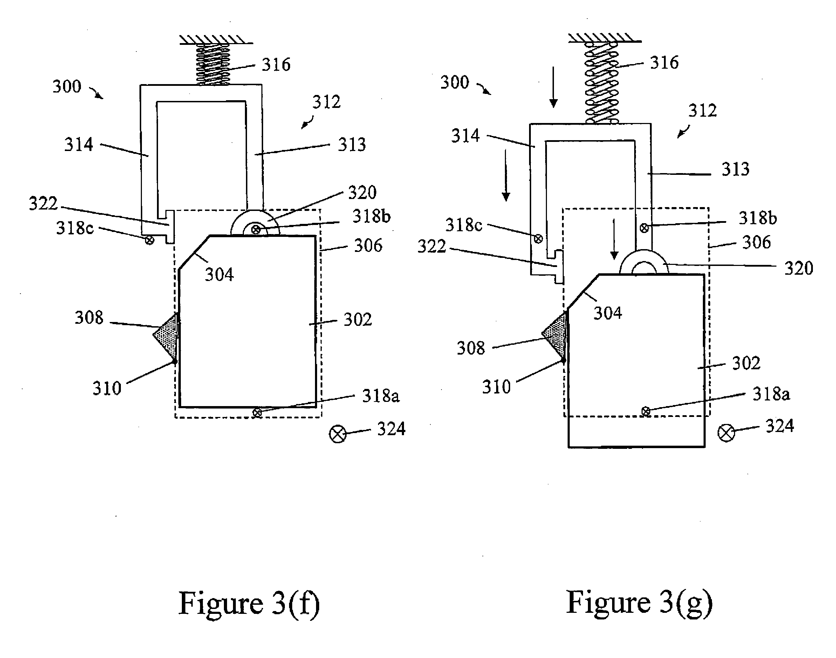

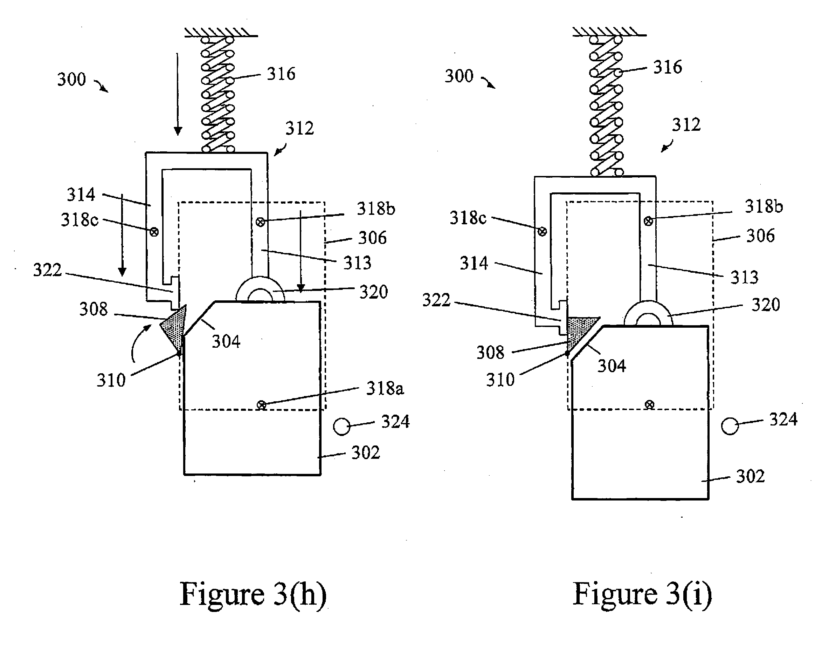

Release of the card 302 may, in one embodiment, be accomplished through the use of the release button 324. By depressing the button 324 as indicated in Figure 3(f), the locking pins 318a, 318b and 318c are each caused to be depressed due to the interlocking relationship therebetween. This allows the card release mechanism 312 to freely move down the card slot (i.e., towards an outer edge of the slot 306) by the compressed energy of the biasing spring 316, as shown in Figure 3(g). As the card 302 continues to be pushed out of the slot 306, the notch 304 begins to move past the outwardly disposed tab 308, which in turn causes the torsion spring 310 to pivotally return the tab 308 back into the slot 306, as illustrated in Figure 3(h). Here again, the position of the door 322 still permits the tab 308 to pivot back into the slot 306. Finally, in Figure 3(i), the card release mechanism 312 is completely returned to the unloaded configuration similar to Figure 3(c), and the card 302 may then be completely pulled out of the slot 306 by the user.

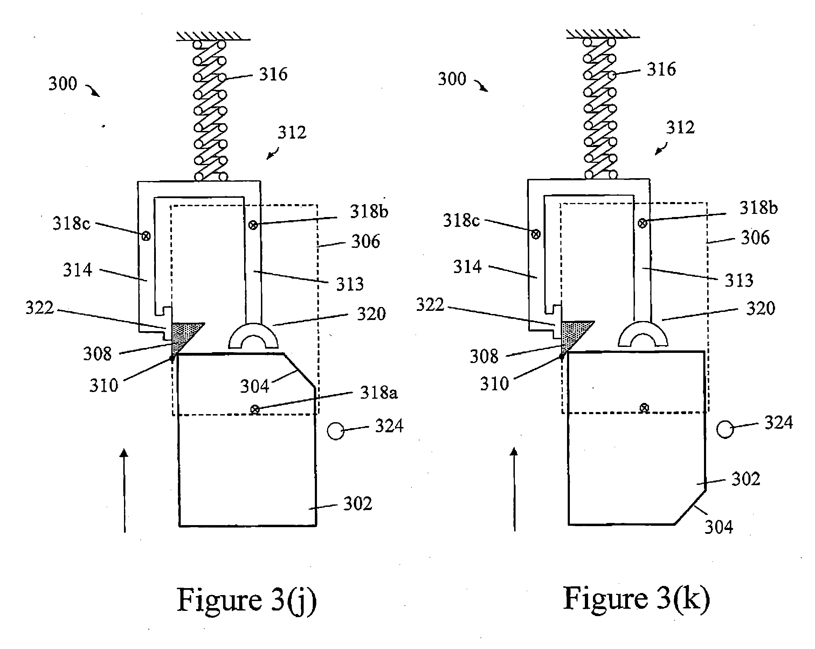

Referring now to Figures 3(j) and 3(k), there are illustrated two exemplary scenarios of where the memory card 302 is incorrectly inserted into the slot 306. That is, the notch 304 does not align with the tab 308. In Figure 3(j), although the card 302 is inserted "notch first", the notch 304 is on the opposite side of the slot 306 with respect to the tab 308. Although the top left corner of the card 302 engages the tab 308, the position of the door 322 remains in its initial position, preventing the tab 308 from being pivoted outward. This is because the improper alignment prevents the leading edge of the card 302 from contacting the post 320 and forcing the card release mechanism 312 upward such that the door 322 is moved away from the tab 308. Accordingly, the card 302 goes no further than is shown in Figure 3(j), and the user is provided with visual and tactile feedback that the card 302 is inserted incorrectly. A similar example is shown in Figure 3(k). In this case, the card 302 is inserted "notch last" but with the same results, in that the contact between the corner of the card 302 and the tab 308 prevents the card from reaching the post 320, which in turn does not allow the door 322 to be moved. Consequently, the tab 308 cannot be moved and the card 302 goes no further than is shown in Figure 3(k).

Referring generally now to Figures 4(a) through 4(n), there are shown a series of schematic diagrams illustrating an example of a memory card slot mechanism 400 for electronic devices. In this embodiment, the slot mechanism 400 has a portrait configuration with respect to a rectangular shaped memory card 402 having a notch 404. In contrast to the first embodiment, a correct orientation of the memory card 402 when inserted into the slot 406 of the slot mechanism 400 has the notch side inserted last.

As more particularly shown in Figure 4(a), the slot mechanism 400 further includes a card release mechanism, shown generally at 408, having an arm 410 with a post 412 disposed at a first end thereof. The arm 410 further includes wing portions 414 proximate the post 412 and is partially disposed within the interior of the slot 406. The arm 410 is biased in a downward orientation with respect to Figure 4(a) by a biasing spring 416 in contact with a second end of the arm 410.

As further shown in Figure 4(a), the slot mechanism 400 additionally includes three locking pins; a primary pin 418a located at a right front portion of the slot 406, and two secondary pins 418b, 418c, mechanically interlocked with pin 418a, located at a back of the slot 406 and on opposing sides of the arm 410. The three locking pins are spring loaded and require very little force to become depressed. As depicted in the figures, where the pins are marked with an "x," they are in a depressed position with respect to the slot 406. That is, the pins do not extend within the slot 406 itself. However, where the pins are not marked with an "x," they are in a released position and the longitudinal axes thereof extend at least partially into the slot 406. Thus, prior to memory card insertion, primary pin 418a and secondary pins 418b and 418c are in a released position. As will be explained in further detail below, a release button 424 may also be provided as one embodiment of a card release mechanism, wherein the release button 424 is mechanically interlocked with the locking pins 418a, 418b, 418c.

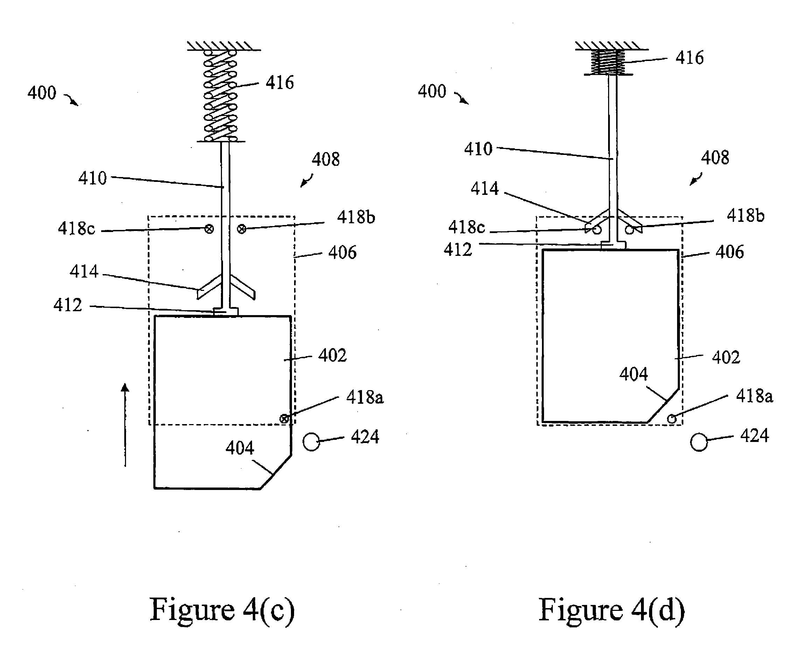

Figures 4(b) through 4(d) illustrate a sequence in which the memory card 402 is inserted into the slot 406 in the correct orientation. That is, the notch 404 is aligned to the location of locking pin 418a. When the card 402 is initially inserted into the card slot 406 as shown in Figure 4(b), a leading edge of the card 402 causes the primary locking pin 418a (and thus pins 418b and 418c) to become depressed and forced out of the slot 406 (into the page of the figure). As the card 402 moves further within the interior of the slot 406 as shown in Figure 4(c), the leading edge of the card 402 comes into contact with the post 412, and begins to move the card release mechanism 408 in an upward direction (i.e., toward the back of the slot 406) against the bias of the biasing spring 416.

As then shown in Figure 4(d), further insertion of the card 402 now causes the notch 404 to move past the location of locking pin 418a, thereby causing each of the locking pins 418a, 418b and 418c to spring up within the slot 406. Because the wing portions 414 of the arm 410 are now located behind pins 418b and 418c within the slot 406, the card release mechanism 408 is prevented from ejecting the card 402 once the user has fully inserted the card 402.

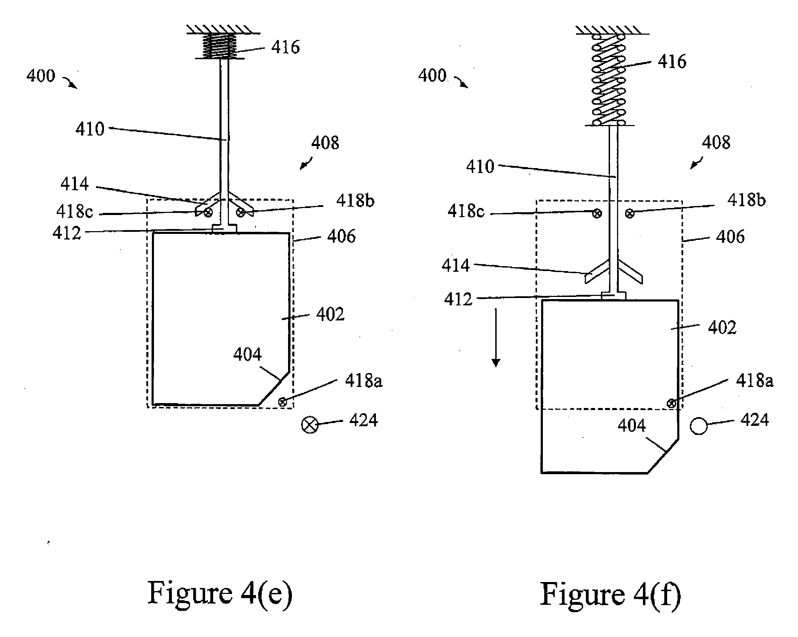

Release of the card 402 may be accomplished through the use of the release button 424. By depressing the button 424 as indicated in Figure 4(e), the locking pins 418a, 418b and 418c are each caused to be depressed due to the interlocking relationship therebetween. This allows the card release mechanism 408 to freely move down the card slot by the compressed energy of the biasing spring 416, as shown in Figure 4(f).

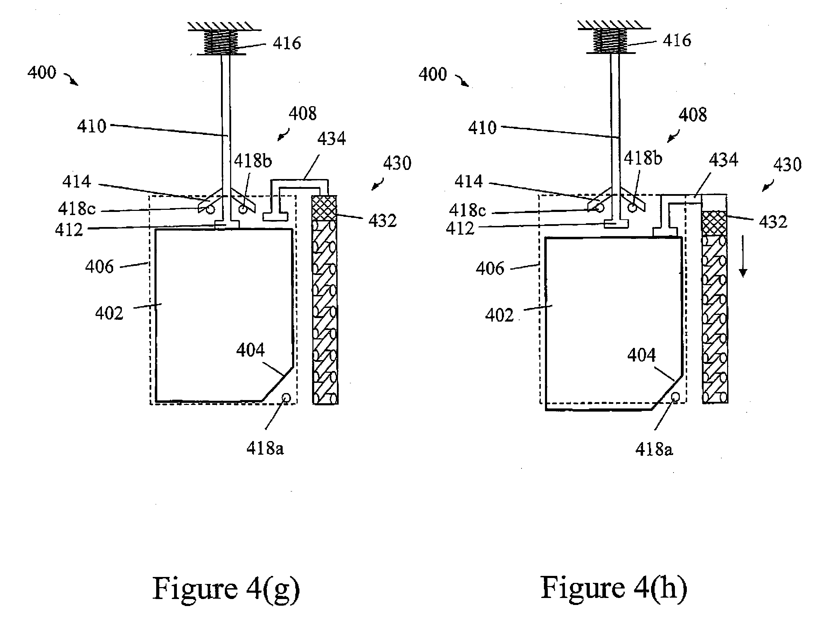

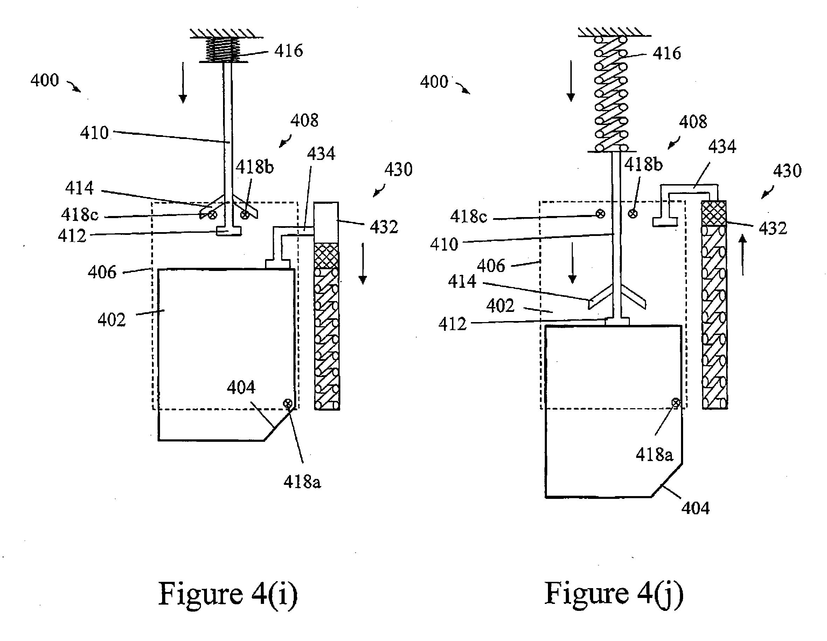

In an alternative example, Figures 4(g) through 4(j) depict another possible mechanism that may be used to eject the card 402. In this embodiment, the ejection mechanism 430 includes a spring biased slider 432 that is capable of being moved (in a downward direction in the figures) by a user. The slider 432 is coupled to a slider arm 434 that, in a standby position, rests at the back of the slot 406 and clear of any interference with insertion of the card or with the card release mechanism 408. When the slider 432 is engaged by a user as shown in Figure 4(h), the slider arm 434 engages the back edge of the card 402 and begins to push the card 402 out from the slot 406. The card 402 will then come in contact with locking pin 418a, as shown in Figure 4(i), causing it to be depressed. Once locking pin 418a becomes depressed, pins 418b and 418c also become depressed as these pins are interlocked as stated above. The card release mechanism 408 is then free to move down the card slot by the compressed energy of the biasing spring 416, as shown in Figure 4(j), while the spring biased slider 432 returns to its standby position.

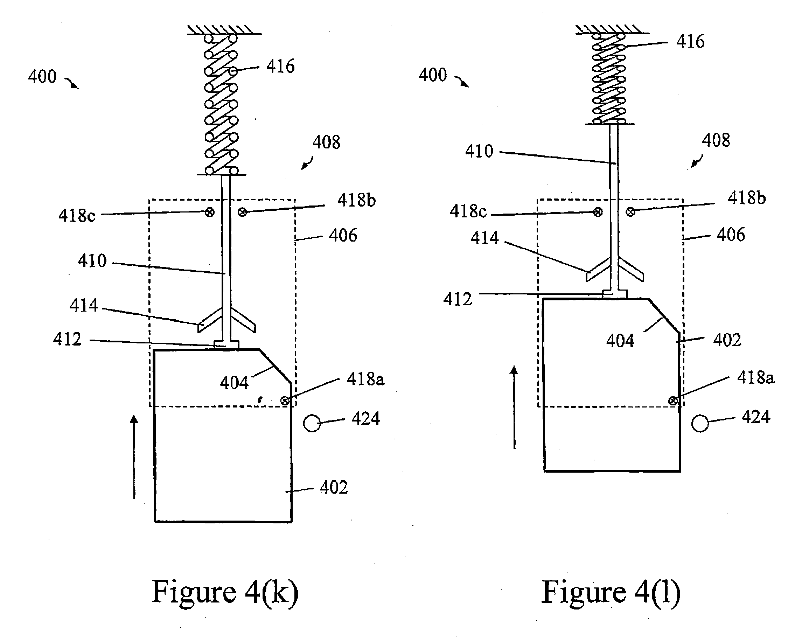

Referring now to Figures 4(k) through 4(n), there is illustrated an exemplary scenario of where the memory card 402 is incorrectly inserted into the slot 406. That is, the notch 404 does not align with the locking pin 418a when the card 402 is fully inserted. In Figure 4(k), regardless of how the card 402 is initially inserted, the locking pin 418a will initially be depressed by the card 402. Locking pins 418b and 418c in turn also become depressed. As the card 402 continues to be slid through the slot in Figure 4(l), locking pins 418a, 418b and 418c remain depressed, since the card 402 continues to exert downward pressure on locking pin 418a.

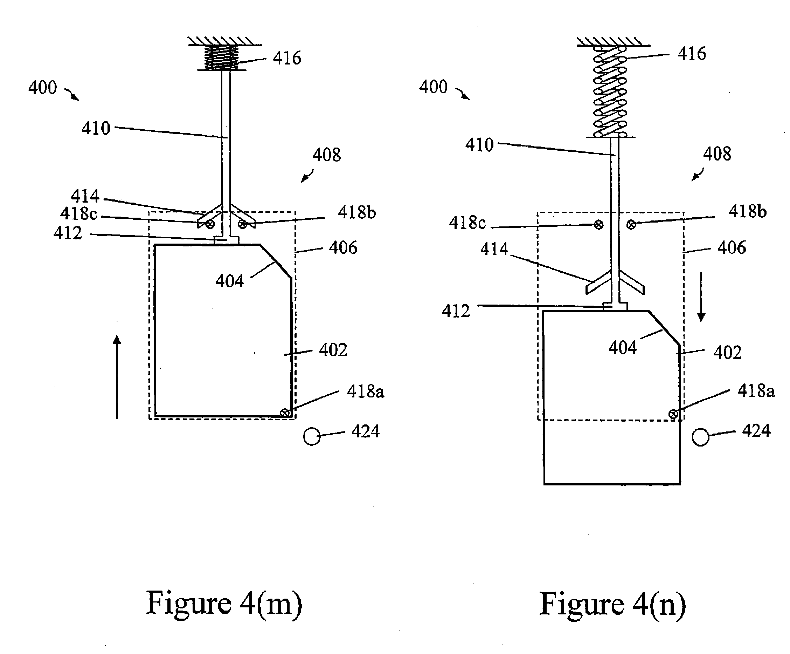

However, once the card 402 is fully inserted into the slot 406 as shown in Figure 4(m), it will be seen that the location of the notch 404 does not correspond to the location of the locking pin 418a. As a result, the locking pin 418a remains depressed by the card 402, as do the locking pins 418b and 418c. Therefore, there is nothing to prevent the card release mechanism 408 from ejecting the card 402 due to the bias of spring 416, as shown in Figure 4(n).

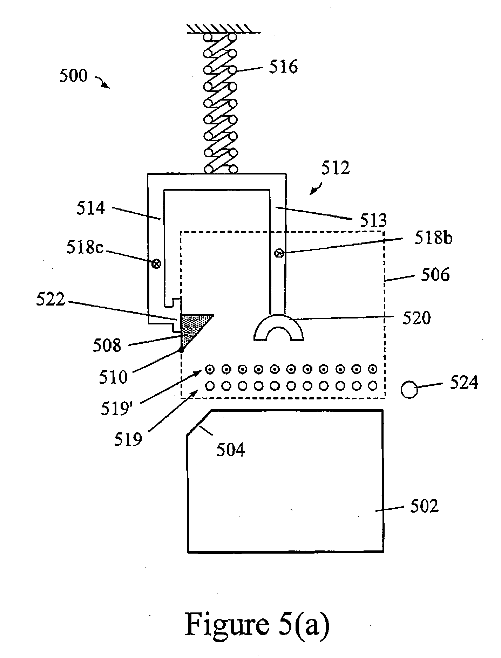

In addition to a memory card slot mechanism having a portrait orientation, it is also contemplated that the slot may also have a landscape orientation so as to accommodate a memory card inserted in a landscape orientation. In this regard, Figures 5(a) through 5(I) are a series of schematic diagrams illustrating another exemplary embodiment of a memory card slot mechanism 500 for electronic devices. In this embodiment, the slot mechanism 500 has a landscape configuration with respect to a rectangular shaped memory card 502 having a notch 504, in which a correct orientation of the memory card 502 when inserted into a slot 506 of the slot mechanism 500 has the notch side inserted first.

As more particularly shown in Figure 5(a), the slot mechanism 500 further includes a triangular shaped tab 508 that protrudes into an interior of the slot 506. The specific position and shape of the tab 508 may be tailored in accordance with the memory card geometry. The tab 508 is pivotally attached at a corner thereof by a torsion spring 510 (having a longitudinal axis running into the figure), which biases the tab 508 to an interior position shown in Figure 5(a). A card release mechanism, shown generally at 512, includes a first arm 513 disposed within the interior of the slot 506 and a second arm 514 disposed exterior to the slot 506. The first and second arms 513, 514 are biased in a downward orientation with respect to Figure 5(a) by a biasing spring 516.

As further shown in Figure 5(a), the slot mechanism 500 additionally includes a pair of locking pins, 518b, 518c. Pin 518b is located at a back of the slot 506, while pin 518c is located exterior to the slot 506. The locking pins are spring loaded and require very little force to become depressed. As depicted in the figures, where the pins are marked with an "x," they are in a depressed position with respect to the slot 506. That is, the pins do not extend within the slot 506 itself. However, where the pins are not marked with an "x," they are in a released position and the longitudinal axes thereof extend at least partially into the slot 506. As will also be noted in the present embodiment, the slot 506 also includes a first row 519 of spring-loaded pins located closest to the card slot opening. This first row 519 of pins may be freely depressed by anything that comes in contact with it. There is also a second row 519' of spring-loaded pins located directly behind the first row 519 of pins. The second row 519' of pins may be in one of three states. The first state, which may be referred to as a locked state (depicted with a small dot in the center of each pin in the figures), means that the pin cannot become depressed by anything that comes in contact with it. The second state, which may be referred to as the unlocked state, means that the pin can become depressed by anything that comes in contact with the pin. The third state occurs when the pin becomes fully depressed by whatever comes in contact with that pin (again, denoted with a small "x" in the figures).

Similar to the first embodiment, the first arm 513 includes a c-shaped post 520 disposed at an end thereof opposite the biasing spring 516, while the second arm 514 includes a door 522 disposed at an end thereof opposite the biasing spring 516. A release button 524 may also be provided as one embodiment of a card release mechanism, wherein the release button 524 is mechanically interlocked with the locking pins 518b, 518c.

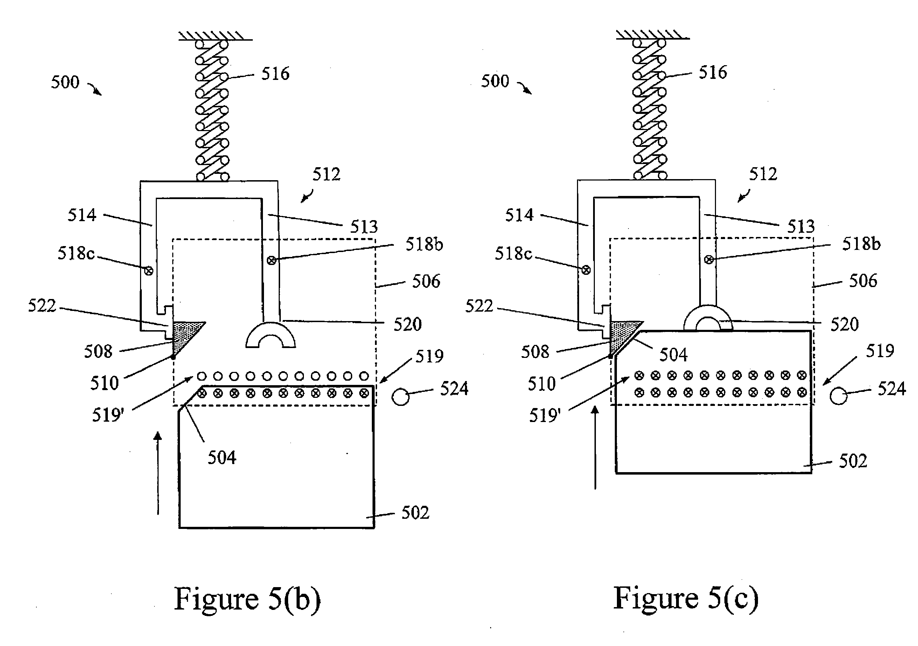

Figures 5(b) through 5(e) illustrate a sequence in which the memory card 502 is inserted into the slot 506 in the correct orientation. That is, the notch 504 is aligned to the tab 508 biased within the slot 506. When the card 502 is initially inserted into the card slot 506 as shown in Figure 5(b), a leading edge of the card 502 depresses the entire first row 519 of pins. Once the first row 519 of pins are depressed, this causes the second row 519' of pins to be unlocked, as shown in Figure 5(b). As the card 502 moves further within the interior of the slot 506 as shown in Figure 5(c), the location of the tab 508 is such that it does not yet make contact with the notch 504. This in turn allows the leading edge of the card 502 to come into contact with the c-shaped post 520, and begins to move the card release mechanism 512 in an upward direction (i.e., toward the back of the slot 506) against the bias of the biasing spring 516.

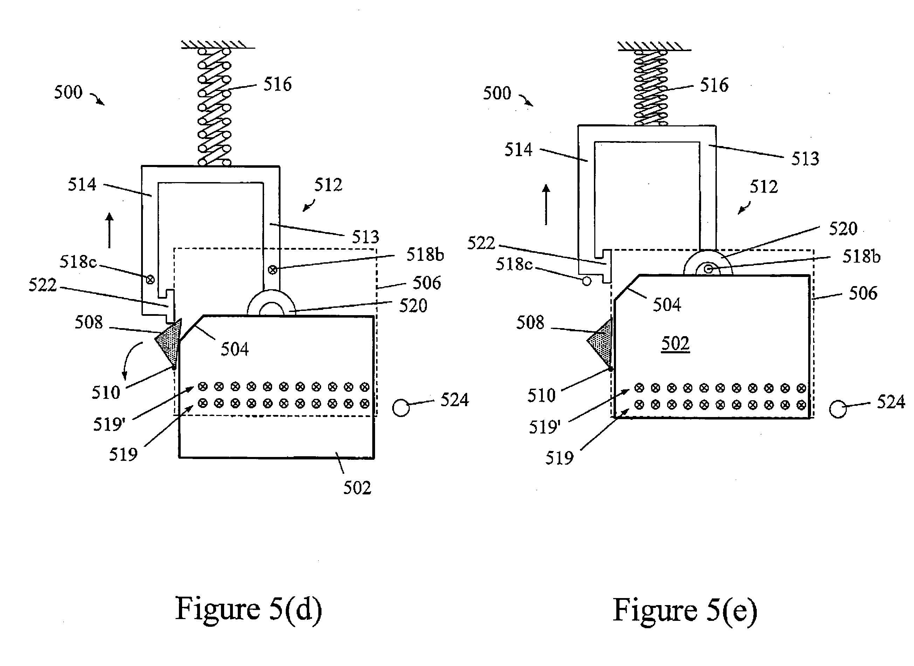

As then shown in Figure 5(d), further insertion of the card 502 now causes the notch 504 to make contact with the tab 508, and causing the tab to pivot outward from the slot 506, against the bias of the torsion spring 510. Notably, the door 522 attached to the second arm 514 has traveled a sufficient distance upward such that the door 522 does not prevent the card 502 from forcing the tab 508 pivotally outward. Eventually, full insertion of the card 502 as shown in Figure 5(e) causes the card release mechanism 512 to clear the area above the locking pins 518b and 518c. As a result, the locking pins 518b and 518c each spring up within the slot 506, in turn preventing the card release mechanism 512 from ejecting the card 502 once the user has fully inserted the card 502.

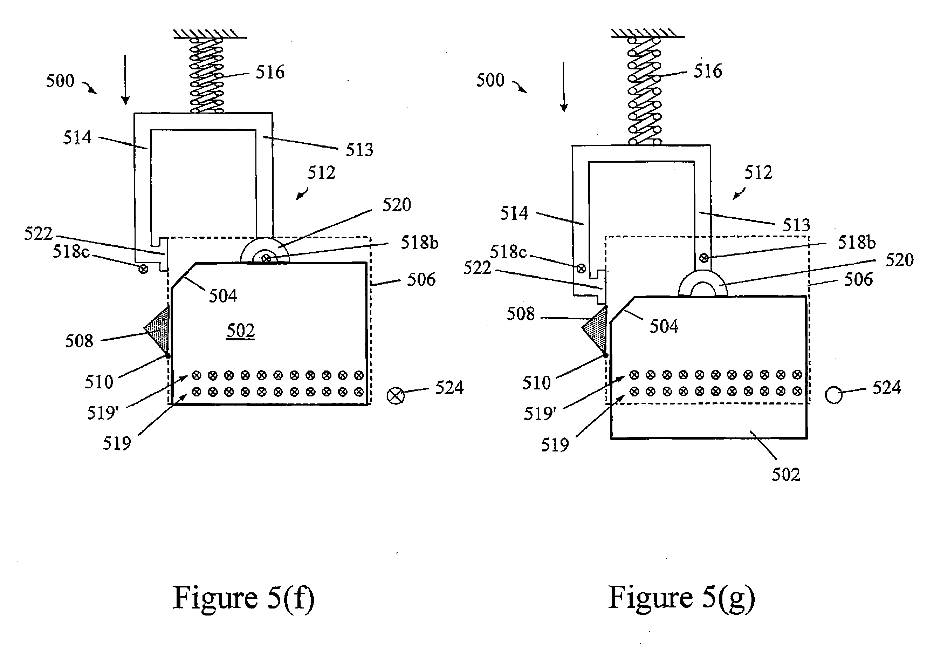

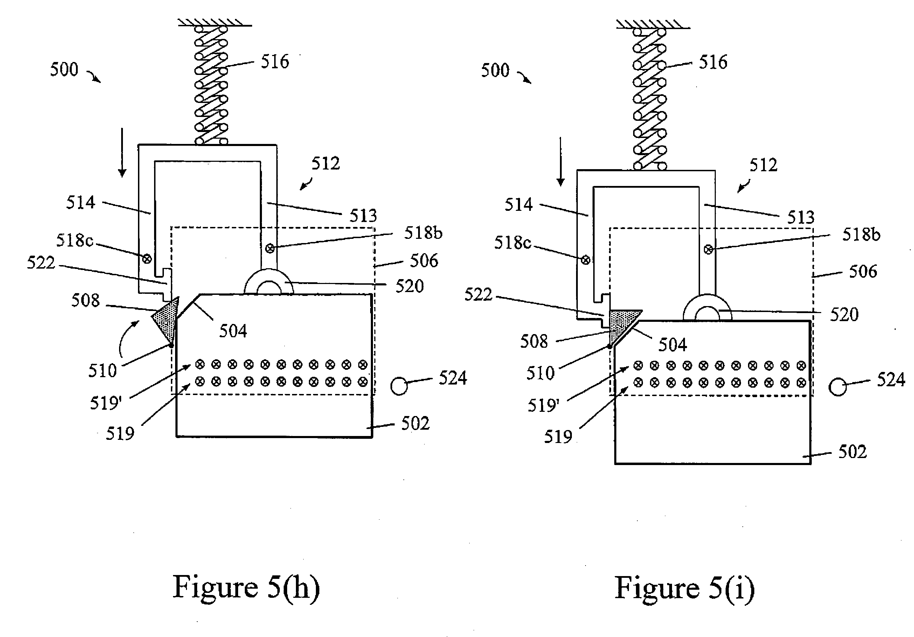

Release of the card 502 may, in one embodiment, be accomplished through the use of the release button 524. By depressing the button 524 as indicated in Figure 5(f), the locking pins 518b and 518c are each caused to be depressed due to the interlocking relationship therebetween. This allows the card release mechanism 512 to freely move down the card slot by the compressed energy of the biasing spring 516, as shown in Figure 5(g). As the card 502 continues to be pushed out of the slot 506, the notch 504 begins to move past the outwardly disposed tab 508, which in turn causes the torsion spring 510 to pivotally return the tab 508 back into the slot 506, as illustrated in Figure 5(h). Here again, the position of the door 522 still permits the tab 508 to pivot back into the slot 506. Finally, in Figure 5(i), the card release mechanism 512 is completely returned to the unloaded configuration similar to Figure 5(c), and the card 502 may then be completely pulled out of the slot 506 by the user.

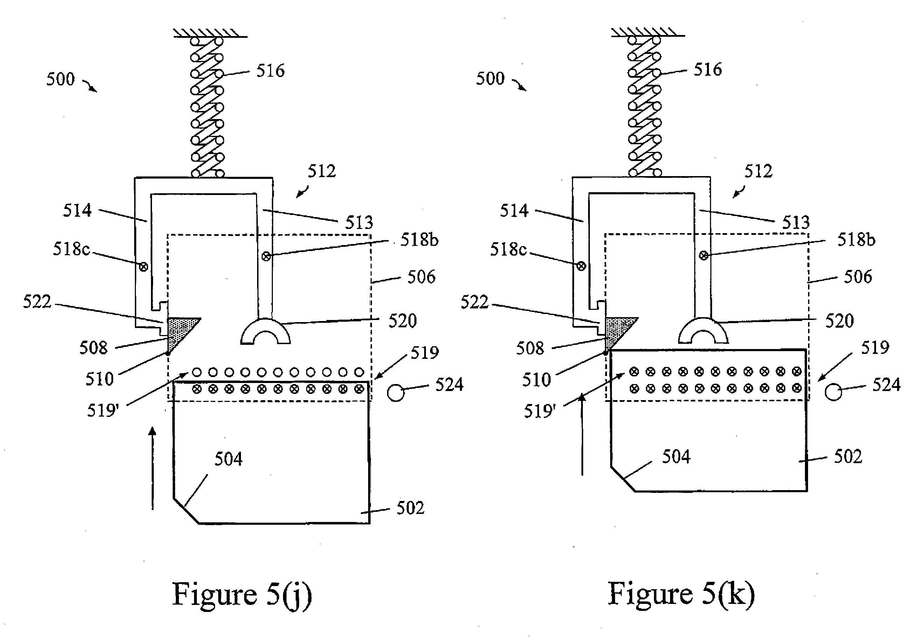

Referring now to Figures 5(j) and 5(k), there is illustrated a first exemplary scenario of where the memory card 502 is incorrectly inserted into the slot 506. That is, the notch 504 is not inserted first within the slot (or does not align with the tab 508). In Figure 5(j), the card is inserted "notch last." Although simultaneous depression of the first row 519 of pins unlocks the second row 519' of pins, further insertion of the card 502 as shown in Figure 5(k) results in the condition that the top left corner of the card 502 engages the tab 508. However, the door 522 remains in its initial position, thus preventing the tab 508 from being pivoted outward and away from the slot 506. This is because the improper alignment prevents the leading edge of the card 502 from contacting the post 520 and forcing the card release mechanism 512 upward such that the door 522 is moved away from the tab 508. Accordingly, the card 502 goes no further than is shown in Figure 5(k), and the user is provided with visual and tactile feedback that the card 502 is inserted incorrectly.

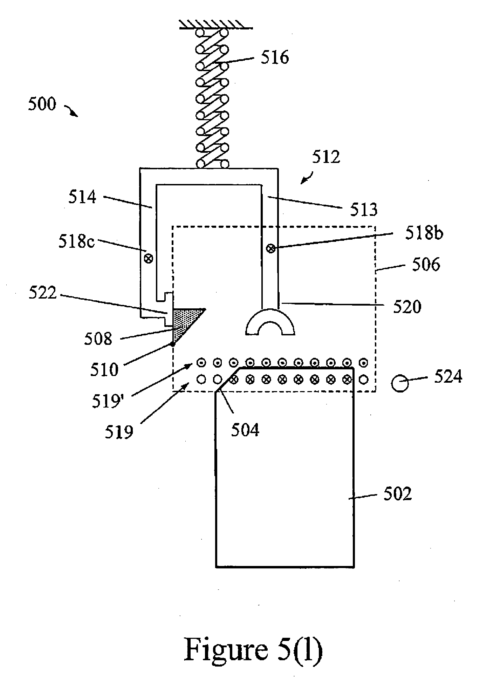

In addition to the possibility that the card 502 could be incorrectly inserted in a landscape orientation, with a landscape slot 506 it is also possible to initially insert the card (incorrectly) in a portrait orientation, as shown in Figure 5(l). In this case, the card 502 regardless of whether inserted "notch first" or "notch last" will only depress some, but not all, of the first row 519 of pins. Consequently, the second row 519' of pins remains locked, and the card 502 goes no further than is shown in Figure 5(l).

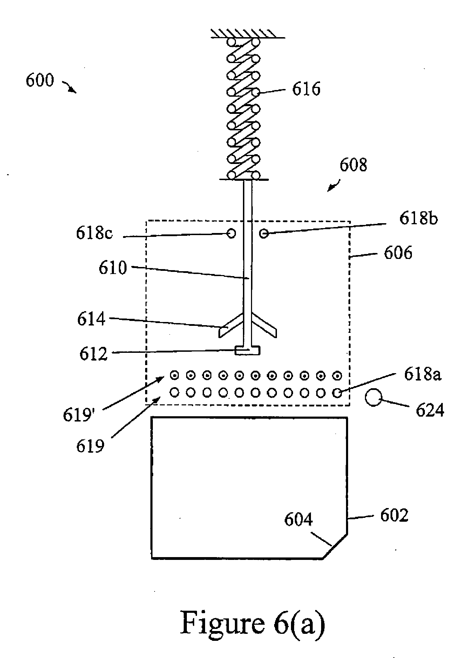

Referring generally now to Figures 6(a) through 6(p), there is shown a series of schematic diagrams illustrating a further example of a memory card slot mechanism 600 for electronic devices. In this example, the slot mechanism 600 has a landscape configuration with respect to a rectangular shaped memory card 602 having a notch 604. In contrast to the third embodiment, a correct orientation of the memory card 602 when inserted into the slot 606 of the slot mechanism 600 has the notch side inserted last (as seen in Figure 6(a)).

As more particularly shown in Figure 6(a), the slot mechanism 600 further includes a card release mechanism, shown generally at 608, having an arm 610 with a post 612 disposed at a first end thereof. The arm 610 further includes wing portions 614 proximate the post 612. The arm 610 is biased in a downward orientation with respect to Figure 6(a) by a biasing spring 616 in contact with a second end of the arm 610.

As further shown in Figure 6(a), the slot mechanism 600 additionally includes three locking pins; a primary pin 618a located at a right front portion of the slot 606, and two secondary pins 618b, 618c, mechanically interlocked with pin 618a, located at a back of the slot 606, on opposing sides of the arm 610. The three locking pins are spring loaded and require very little force to become depressed. As depicted in the figures, where the pins are marked with an "x," they are in a depressed position with respect to the slot 606. That is, the pins do not extend within the slot 606 itself. However, where the pins are not marked with an "x," they are in a released position and the longitudinal axes thereof extend at least partially into the slot 606.

As will also be noted in the present example (and similar to the third embodiment), the slot 606 also includes a first row 619 of spring-loaded pins (including locking pin 618a) located closest to the card slot opening. This first row 619 of pins may be freely depressed by anything that comes in contact with it. There is also a second row 619' of spring-loaded pins located directly behind the first row 619 of pins. The second row 619' of pins may be in one of three states. The first state, which may be referred to as a locked state (depicted with a small dot in the center of each pin in the figures), means that the pin cannot become depressed by anything that comes in contact with it. The second state, which may be referred to as the unlocked state, means that the pin can become depressed by anything that comes in contact with the pin. The third state occurs when the pin becomes fully depressed by whatever comes in contact with that pin (again, denoted with a small "x" in the figures).

Thus, prior to memory card insertion, primary pin 618a (and the other pins in the first row 619) and secondary pins 618b and 618c are in a released position. The second row 619' of pins are in a locked position. As will be explained in further detail below, a release button 624 may also be provided as one example of a card release mechanism, wherein the release button 624 is mechanically interlocked with the locking pins 618a, 618b, 618c.

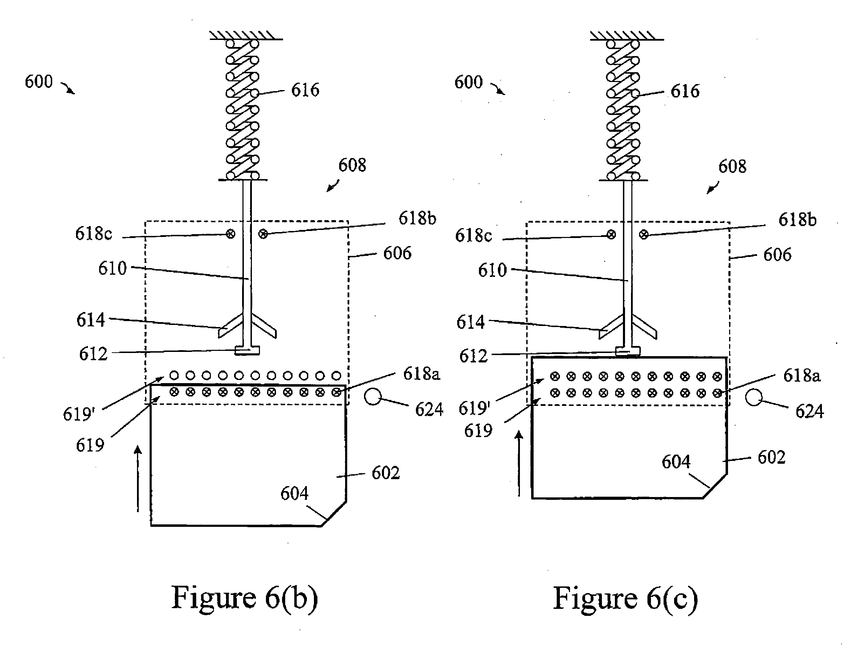

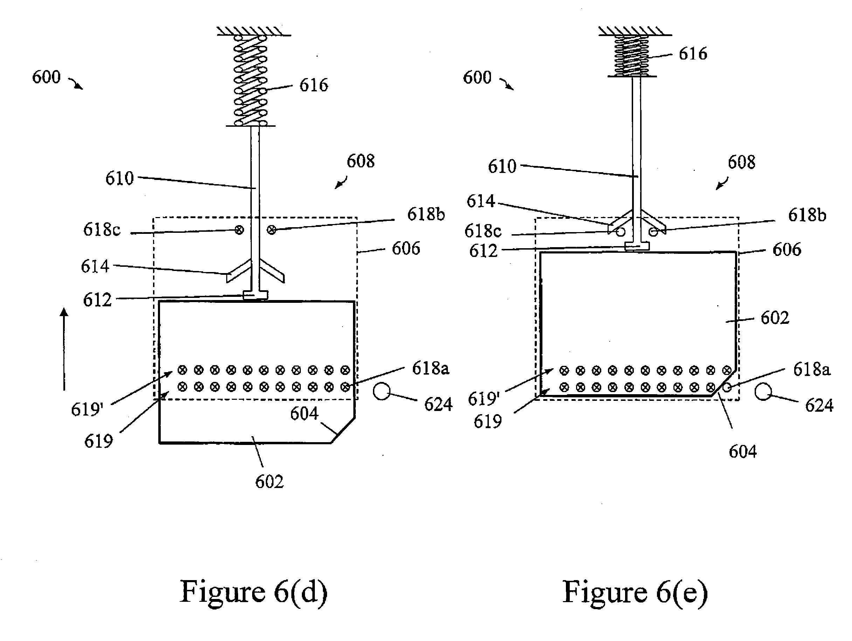

Figures 6(b) through 6(e) illustrate a sequence in which the memory card 602 is inserted into the slot 606 in the correct orientation. That is, the notch 604 is aligned to the location of locking pin 618a when fully inserted. When the card 602 is initially inserted into the card slot 606 as shown in Figure 6(b), a leading edge of the card 602 causes the primary locking pin 618a (and thus pins 618b and 618c) to become depressed and forced out of the slot 606. Also, because the leading edge of the card 602 depresses the entire first row 619 of pins, this causes the second row 619' of pins to be unlocked, as further shown in Figure 6(b). As the 602 card moves further within the interior of the slot 606 as shown in Figure 6(c), the leading edge of the card 602 comes into contact with the post 612, and then begins to move the card release mechanism 608 in an upward direction (i.e., toward the back of the slot 606) against the bias of the biasing spring 616 as shown in Figure 6(d).

Referring to Figure 6(e), further insertion of the card 602 now causes the notch 604 to move past the location of locking pin 618a, thereby causing each of the locking pins 618a, 618b and 618c to spring up within the slot 606. Because the wing portions 614 of the arm 610 are now located behind pins 618b and 618c within the slot 606, the card release mechanism 608 is prevented from ejecting the card 602 once the user has fully inserted the card 602.

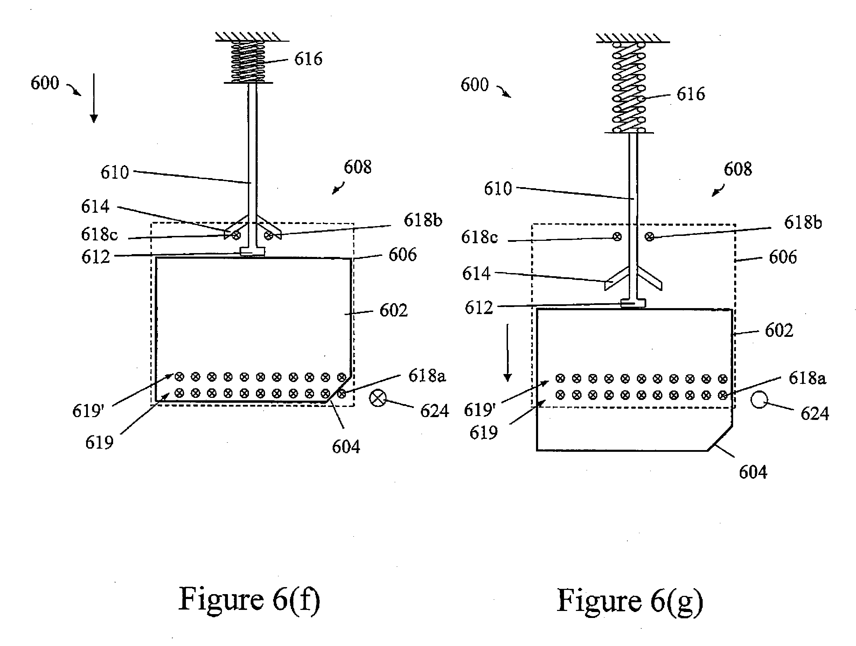

Release of the card 602 may, in one embodiment, be accomplished through the use of the release button 624. By depressing the button 624 as indicated in Figure 6(f), the locking pins 618a, 618b and 618c are each caused to be depressed due to the interlocking relationship therebetween. This allows the card release mechanism 608 to freely move down the card slot by the compressed energy of the biasing spring 616, as shown in Figure 6(g).

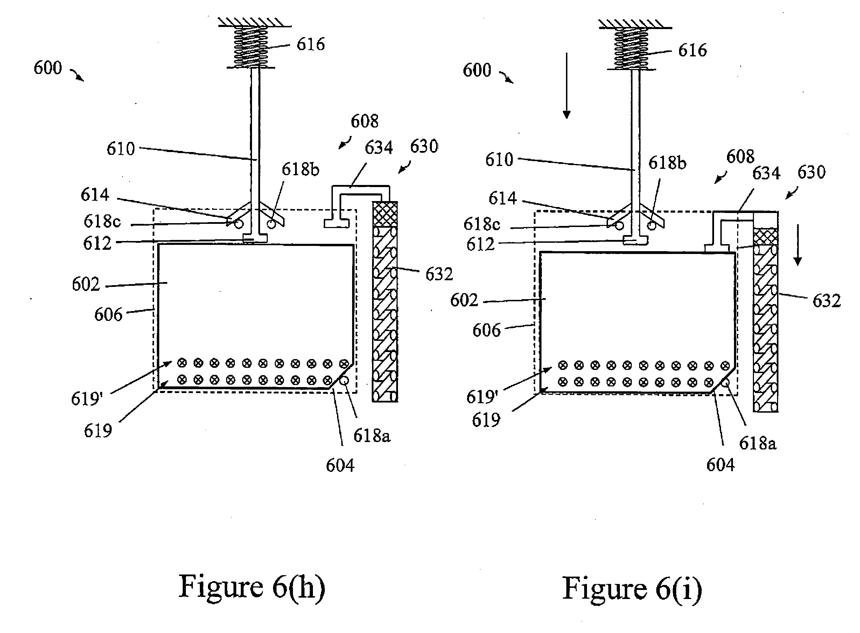

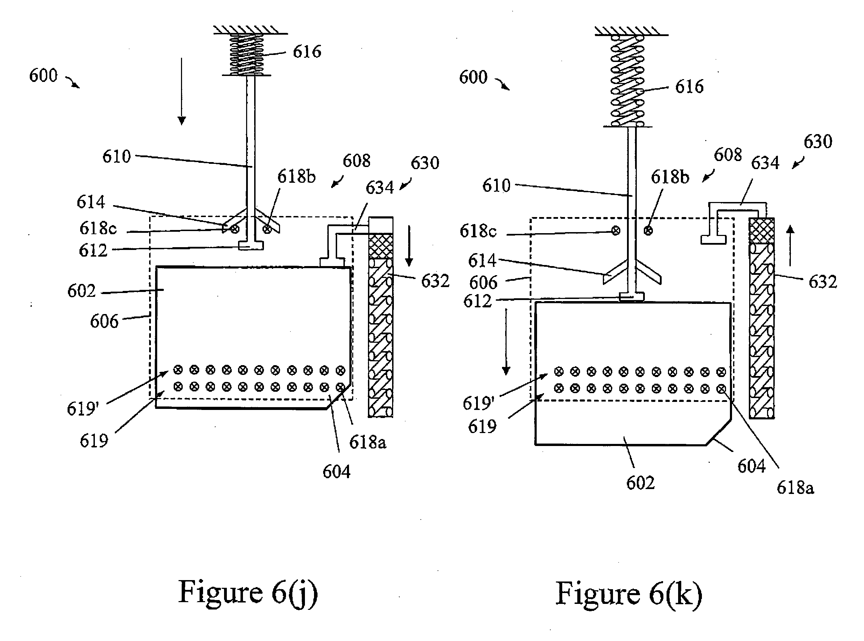

In an alternative example, Figures 6(h) through 6(k) depict another possible mechanism that may be used to eject the card 602. In this embodiment, the ejection mechanism 630 includes a spring biased slider 632 that is capable of being moved (in a downward direction in the figures) by a user. The slider 632 is coupled to a slider arm 634 that, in a standby position, rests at the back of the slot 606 and clear of any interference with insertion of the card or with the card release mechanism 608. When the slider 632 is engaged by a user as shown in Figure 6(i), the slider arm 634 engages the back edge of the card 602 and begins to push the card 602 out from the slot 606. The card 602 will then come in contact with locking pin 618a, as shown in Figure 6(j), causing it to be depressed. Once locking pin 618a becomes depressed, pins 618b and 618c also become depressed as these pins are interlocked as stated above. The card release mechanism 608 is then free to move down the card slot by the compressed energy of the biasing spring 616, as shown in Figure 6(k), while the spring biased slider 632 returns to its standby position.

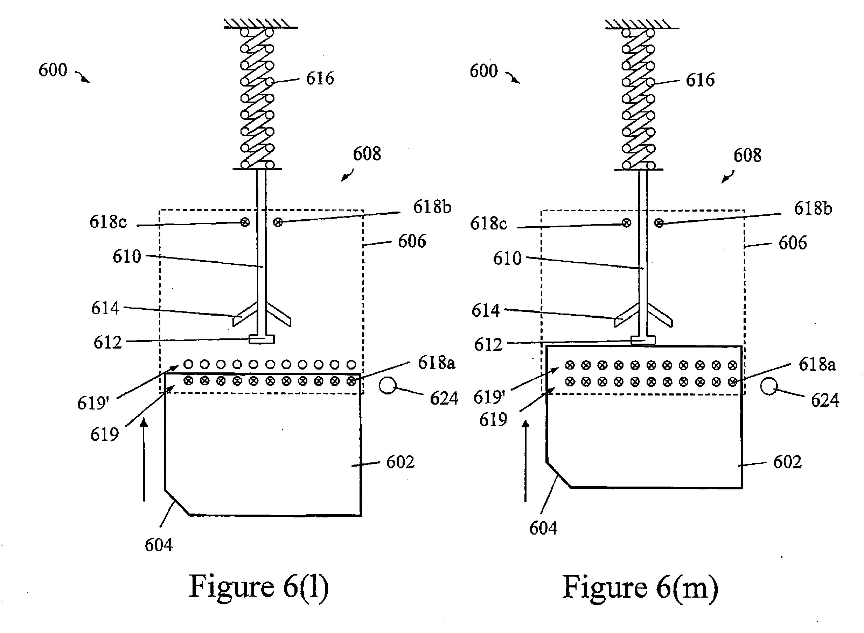

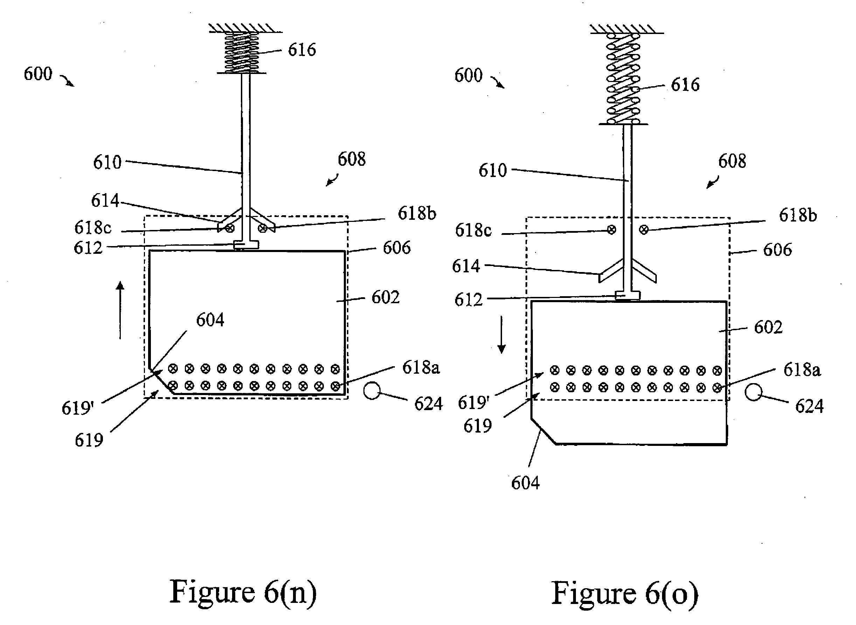

Referring now to Figures 6(l) through 6(o), there is illustrated a first exemplary scenario of where the memory card 602 is incorrectly inserted into the slot 606. That is, the notch 604 does not align with the locking pin 618a when the card 602 is fully inserted. In Figure 6(l), regardless of how the card 602 is initially inserted, simultaneous depression of the first row 619 of pins unlocks the second row 619' of pins. In addition, depression of the locking pin 618a leads to depression of locking pins 618b and 618c. Further insertion of the card 602 as shown in Figure 6(m) results in depression of the second row 619' of pins and engagement with the post 612 of the card release mechanism 608. However, once the card 602 is fully inserted into the slot 606 as shown in Figure 6(n), it will be seen that the location of the notch 604 does not correspond to the location of the locking pin 618a. As a result, the locking pin 618a remains depressed by the card 602, as do the locking pins 618b and 618c. Therefore, there is nothing to prevent the card release mechanism 608 from ejecting the card 602 due to the bias of spring 616, as shown in Figure 6(o).

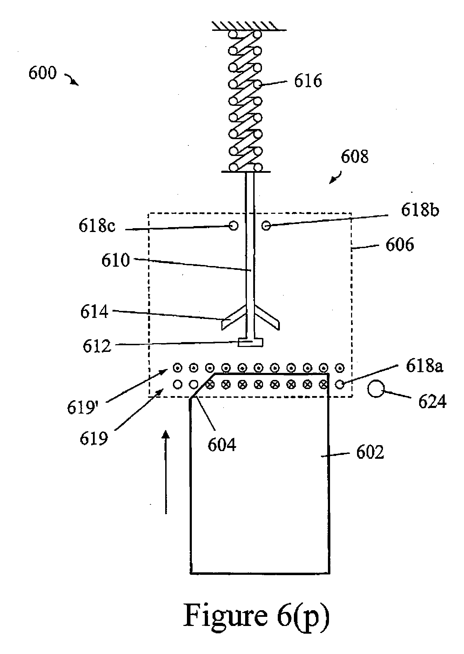

Figure 6(p) illustrates a second exemplary scenario of where the memory card 602 is incorrectly inserted into the slot 606. More specifically, Figure 6(p) depicts the card 602 incorrectly inserted in a portrait orientation. Similar to the embodiment of Figure 5(l), the card 602, regardless of whether inserted "notch first" or "notch last" will only depress some, but not all, of the first row 619 of pins. Consequently, the second row 619' of pins remains locked, and the card 602 goes no further than is shown in Figure 6(p).

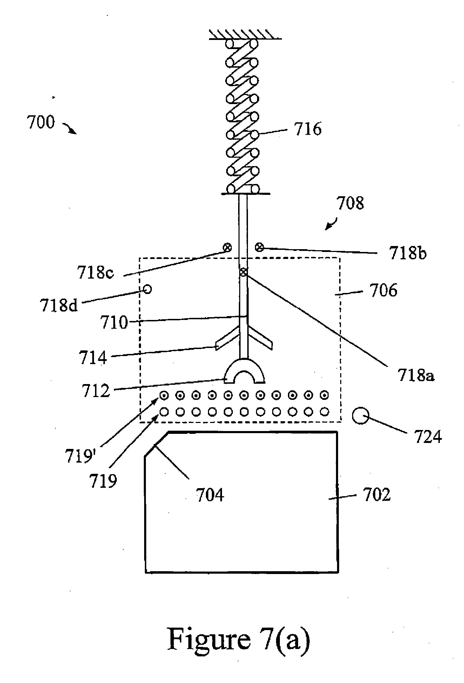

Referring generally now to Figures 7(a) through 7(k), there is shown a series of schematic diagrams illustrating a yet further example of a memory card slot mechanism 700 for electronic devices. In this example, the slot mechanism 700 has a landscape configuration with respect to a rectangular shaped memory card 702 having a notch 704. In contrast to the example of Figures 6, a correct orientation of the memory card 702 when inserted into the slot 706 of the slot mechanism 700 has the notch side inserted first. However, in contrast to the embodiment of Figures 5, no pivoting tab is utilized.

As particularly shown in Figure 7(a), the slot mechanism 700 further includes a card release mechanism, shown generally at 708, having an arm 710 with a c-shaped post 712 disposed at a first end thereof. The arm 710 further includes wing portions 714 proximate the post 712. The arm 710 is biased in a downward orientation with respect to Figure 7(a) by a biasing spring 716 in contact with a second end of the arm 710.

As further shown in Figure 7(a), the slot mechanism 700 additionally includes four locking pins; a primary pin, 718a, two secondary pins, 718b, 718c and an orientation pin 718d. The secondary pins 718b, 718c are mechanically interlocked with pin 718a. The orientation pin 718d is mechanically interlocked with pin 718a such that when orientation pin 718d becomes depressed, so does pin 718a. However, when pin 718d is in a released position, it has no effect on whether pin 718a is in a released state. As depicted in the figures, where the pins are marked with an "x," they are in a depressed position with respect to slot 706. Thus, prior to card insertion, secondary pins 718b and 718c are held in a depressed position due to the arm 710 depressing primary pin 718a. However, orientation pin 718d is in a released position as nothing is making contact with that pin.

The slot 706 includes a first row 719 of pins that may be freely depressed by anything that comes in contact with it. A second row 719' of pins, directly behind the first row 719, may be in one of three states. A first state may be a locked state, where the pins may not be depressed by anything that comes in contact with it. A second state may be an unlocked state, where the second row 719' of pins can be freely depressed by anything that comes in contact with it. In addition, a third state, referred to as a depressed state, occurs when the pins are being depressed by something which comes in contact with those pins (e.g., a card). The second row 719' of pins are mechanically linked with the first row 719 of pins such that they only go into an unlocked state when all pins in the first row 719 become depressed. As will be explained in further detail below, a release button 724 may also be provided as one example of a card release mechanism, wherein the release button 724 is mechanically interlocked with the locking pins 718a, 718b, 718c.

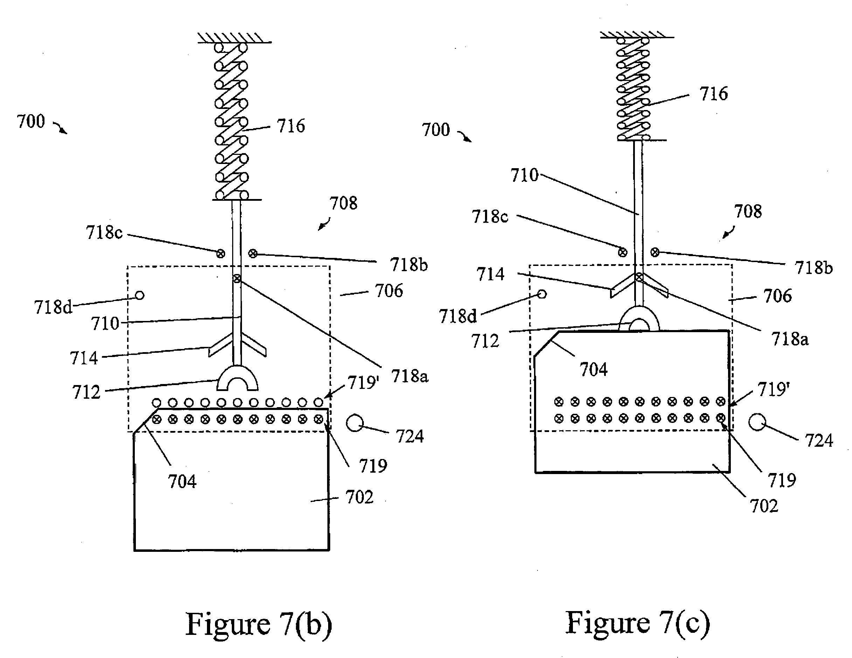

Figures 7(b) through 7(d) illustrate a sequence in which the card 702 is inserted into slot 706 in the correct orientation. That is, the notch 704 is aligned with the orientation pin 718d within the slot 706. When the card 702 is initially inserted into the card slot 706 as shown in Figure 3(b), a leading edge of the card 702 makes contact with and depresses all of the first row 719 of pins. This causes the second row 719' to be in an unlocked state. Further insertion of the card causes the leading edge of the card to make contact with and depress each pin in the second row 719', as shown in Figure 7(c). Further insertion of the card 702 then causes the leading edge of the card to make contact with the post 712, thereby moving the card release mechanism 708 in an upward direction (i.e., toward the back of the slot 706) against the bias of the biasing spring 716 as also shown in Figure 7(c).

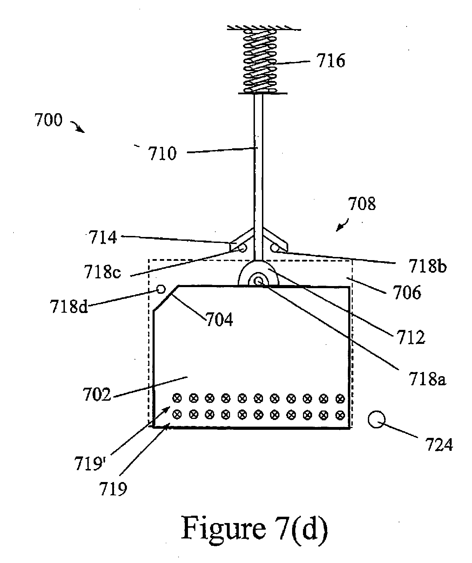

Further insertion of the card 702, as shown in Figure 7(d), causes the post 712 to clear primary pin 718a, thus causing pin 718a to become released. At the same time, the wing portions 714 of the card release mechanism 708 clear the secondary pins, 718b, 718c, causing those pins to be released. In addition, when the card 702 is fully inserted, it does not make contact with the orientation pin 718d due to the notch 704 aligning therewith. Since the primary pin 718a and the secondary pins, 718b, 718c are all in a released position, the card release mechanism 708, is prevented from ejecting the card 702.

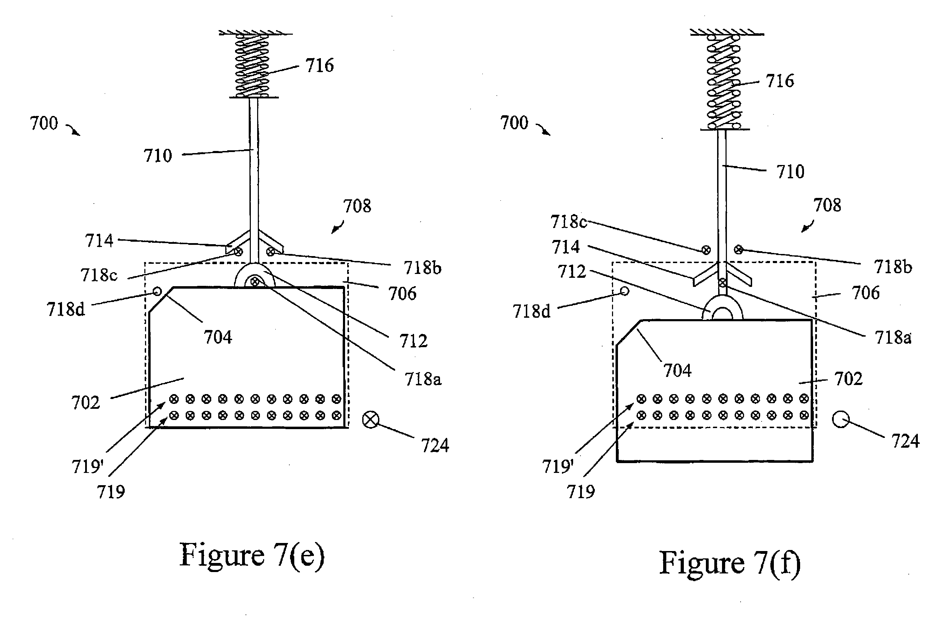

Release of the card 702 may, in one example, be accomplished through the use of the release button 724. By depressing the button 724, as indicated in Figure 7(e), the locking pins 718a, 718b, and 718c are each caused to be depressed due to the interlocking relationship therebetween. This allows the card release mechanism 708 to freely move down the card slot by the compressed energy of the biasing spring 716, as shown in Figure 7(f). As the post 712 and the arm 710 slide past the primary locking pin 718a, the primary locking pin 718a remains depressed, causing the secondary locking pins 718b, 718c, to remain depressed as well due to the interlocking relationship therebetween.

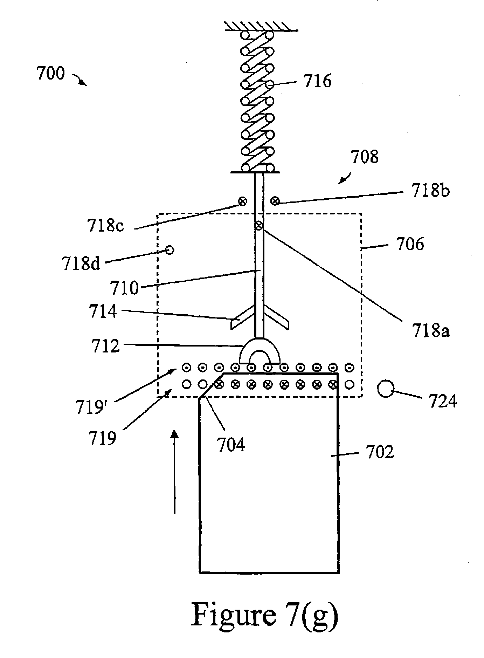

Figure 7(g) illustrates an exemplary scenario of where the card is incorrectly inserted into the slot 706. More specifically, Figure 7(g) depicts the card 702 incorrectly inserted in a portrait orientation. Similar to the embodiment of Figure 5(I), the card 702, regardless of whether inserted "notch first," or "notch last," will only depress some, but not all, of the first row 719 of pins. Consequently, the second row 719' of pins remains locked, and the card 702 goes no further than is shown in Figure 7(g).

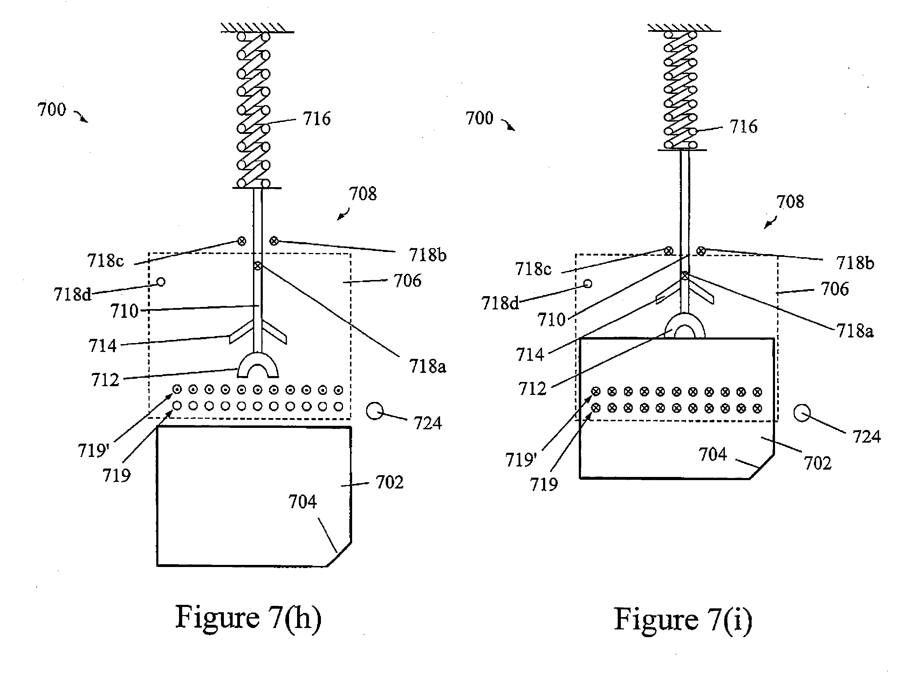

Finally, Figures 7(h) through 7(k) illustrate a second exemplary scenario of where the card 702 is incorrectly inserted into the slot 706. That is, the notch 704 does not align with the orientation pin 718d when the card 702 is fully inserted. In Figure 7(i), regardless of how the card 702 is initially inserted, simultaneous depression of the first row 719 of pins unlocks the second row 719' of pins. This allows the card 702 to make contact with the post 712, causing the card release mechanism 708 to move in an upward direction (i.e., toward the back of the slot 706), against the bias of the biasing spring 716.

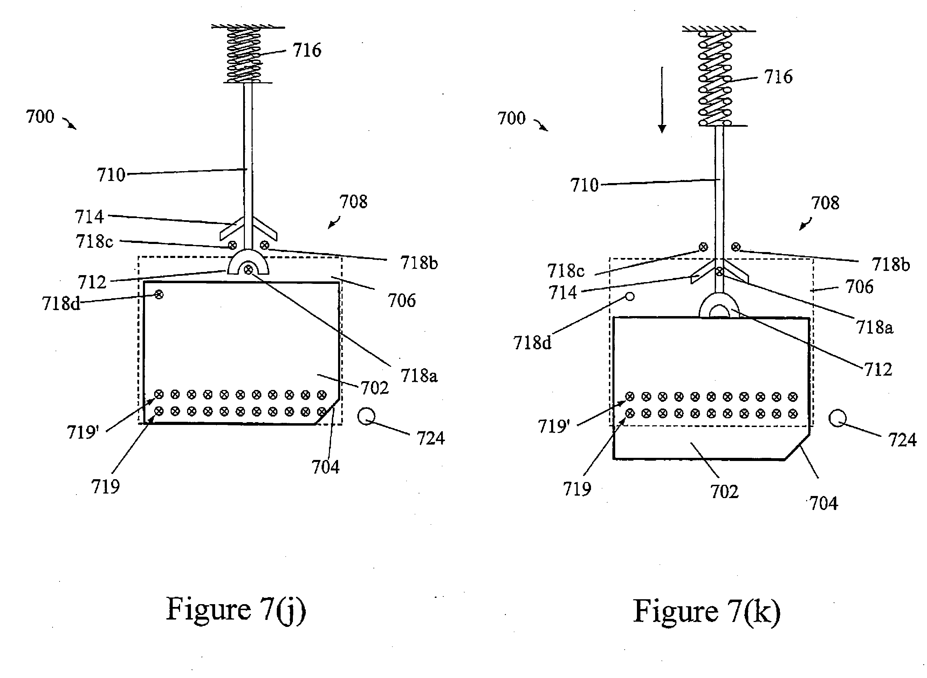

Further insertion of the card, as seen in Figure 7(j) causes the post, 712 to clear the primary pin 718a, causing pin 718a to become released. At the same time, the wing portions 714 of the card release mechanism 708 clear the secondary pins, 718b, 718c, causing those pins to become depressed. However, since the notch 704 of the card does not align with orientation pin 718d, the card also depresses orientation pin 718d. Thus, primary pin 718a becomes depressed due to the mechanical interlock with orientation pin 718d. Further, since secondary pins 718b, 718c are mechanically interlocked with primary pin 718a, the secondary pins also become depressed. Since there are no pins obstructing the card release mechanism, 708, the card release mechanism can eject the card using the energy stored in the bias spring 716, as seen in Figure 7(k).

As will thus be appreciated, an exemplary card slot mechanism for an electronic device adapted to receive a card therein is disclosed. The slot mechanism includes a slot disposed within the electronic device; a pivotally moveable tab that is spring biased to protrude within an interior of the slot; and a spring biased card release mechanism, including a first arm disposed within the interior of the slot and a second arm disposed exterior to the slot; wherein the second arm is configured to prevent movement of the pivotally moveable tab by the card when the card is inserted in an incorrect orientation, thereby preventing complete insertion of the card, and wherein the first arm is configured to allow movement of the pivotally moveable tab by the card when the card is inserted in a correct orientation, thereby allowing complete insertion of the card.

As will be further appreciated, another exemplary slot mechanism for an electronic device adapted to receive a card therein includes a slot disposed within the electronic device. A spring biased card release mechanism has an arm with a post disposed at a first end thereof. The arm is partially disposed within an interior of the slot, and further includes wing portions disposed proximate the post. A first locking pin is located at a front of the slot, and second and third locking pins are located at a back of the slot, disposed at opposing sides of the arm, the second and third locking pins mechanically interlocked with the first locking pin. The first locking pin is configured to be depressed from an initial released position by insertion of the card such that depression of the first locking pin also causes depression of the second and third locking pins from the released position. Upon successful complete insertion of the memory card into the slot, the first, second and third locking pins are caused to be returned to the released position, thereby preventing the card release mechanism from ejecting the memory card.

As will thus be appreciated, the above described embodiments allow an electronic device to become better aware when a card is inserted incorrectly, even before device power up, or receiving an error indication or an inability to register with a network, for example. As a result, the user is less likely to experience an unsatisfactory "out-of-box" experience.

While the disclosure has been described with reference to a preferred embodiment or embodiments, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure not be limited to the particular embodiment disclosed as the best mode contemplated for carrying out this disclosure, but that the disclosure will include all embodiments falling within the scope of the appended claims.

## Claims

1. A slot mechanism (300) for an electronic device (100) adapted to receive a card (302) therein, the slot mechanism (300) comprising:
a slot (306) disposed within the electronic device (300);
**characterised in that** the slot mechanism (300) comprises:
a pivotally moveable tab (308) that is spring biased to protrude within an interior of the slot (306); and
a spring biased card release mechanism (312), including a first arm (313) disposed within the interior of the slot (306) and a second arm (314) disposed exterior to the slot (306);
wherein the second arm (314) is configured to prevent movement of the pivotally moveable tab (308) by the card (302) when the card (302) is inserted in an incorrect orientation, thereby preventing complete insertion of the card (302), and wherein the first arm (313) is configured to allow movement of the pivotally moveable tab (308) by the card (302) when the card (302) is inserted in a correct orientation, thereby allowing complete insertion of the card (302).

2. The slot mechanism (300) of claim 1, further comprising:
a first locking pin (318a) located at a front of the slot (306), a second locking pin (318b) located at a back of the slot, and a third locking pin (318c) located exterior to the slot (306), the second and third locking pins (318b, 318c) mechanically interlocked with the first locking pin (318a);
the first locking pin (318a) configured to be depressed from an initial released position by insertion of the card (302) such that depression of the first locking pin (318a) also causes depression of the second and third locking pins (318b, 318c) from the released position;
wherein, upon successful complete insertion of the card (302) into the slot (306), the first, second and third locking pins (318a, 318b, 318c) are caused to be returned to the released position, thereby preventing the card release mechanism (312) from ejecting the card.

3. The slot mechanism (300) of claim 1 or 2, wherein the card release mechanism (312) is configured such that a notch part (304) of the card (302) aligns with the tab (308) when the card (302) is inserted correctly, thereby causing a leading edge of the card (302) to engage the first arm (313) and move the second arm (314) away from the tab (308), allowing the tab (308) to be pivotally moved out of the slot (306) by the card (302).

4. The slot mechanism (300) of claim 3, wherein the card release mechanism (312) is configured such that the notch part (304) of the card (302) fails to align with the tab (308) when the card (302) is inserted incorrectly, thereby preventing a leading edge of the card (302) to engage the first arm (313) and move the second arm (314) away from the tab (308), in turn preventing the tab (308) from being pivotally moved out of the slot (306) by the card (302).

5. The slot mechanism (300) of any of claims 1 to 4, further comprising a release button (324) interlocked with the first, second and third locking pins (318a, 318b, 318c) such that depression of the release button (324) causes depression of the first, second and third locking pins (318a, 318b, 318c), and causing the card release mechanism (312) to eject the card (302).

6. The slot mechanism (300) of claim 5, wherein during ejection of the card (302), the pivotally moveable tab (308) is caused to return back into the slot (306).

7. The slot mechanism (300) of any of claims 1 to 6, wherein the slot (306) is shaped to receive correct insertion of the card (302) in a portrait orientation.

8. The slot mechanism (300) of any of claims 1 to 6, wherein the slot (306) is shaped to receive correct insertion of the card (302) in a landscape orientation.

9. The slot mechanism (500) of claim 8, further comprising:
a first row (519) of pins located at a front of the slot (506); and
a second row (519') of pins located behind the first row (519) of pins, wherein the second row (519') of pins is configured to be locked until each of the first row 519300) of pins is caused to be depressed.

10. The slot mechanism (300) of claim 9, wherein improper insertion of the card (502) in a portrait orientation prevents simultaneous depression of the each of the first row (519) of pins such that the card (502) is prevented from advancing beyond the second row (519') of pins.

11. An electronic device (100), comprising:
a housing (102); and
the slot mechanism (300, 500) according to any of claims 1-10, disposed within the housing (102).

## Patentansprüche

1. Schlitz-Mechanismus (300) für eine elektronische Vorrichtung (100), ausgebildet zum Aufnehmen einer Karte (302) darin, wobei der Schlitz-Mechanismus (300) aufweist:
einen Schlitz (306), der in der elektronischen Vorrichtung (300) angeordnet ist;
**dadurch gekennzeichnet, dass** der Schlitz-Mechanismus (300) aufweist:
einen schwenkend bewegbaren Vorsprung (308), der durch eine Feder beeinflusst wird, um in einem Inneren des Schlitzes (306) hervorzustehen; und
einen durch eine Feder beeinflussten Kartenfreigabemechanismus (312) mit einem ersten Arm (313), der im Inneren des Schlitzes (306) angeordnet ist, und einem zweiten Arm (314), der außerhalb des Schlitzes (306) angeordnet ist;
wobei der zweite Arm (314) konfiguriert ist, eine Bewegung des schwenkend bewegbaren Vorsprungs (308) durch die Karte (302) zu verhindern, wenn die Karte (302) in einer falschen Ausrichtung eingeführt wird, wodurch ein vollständiges Einführen der Karte (302) verhindert wird, und wobei der erste Arm (313) konfiguriert ist, eine Bewegung des schwenkend bewegbaren Vorsprungs (308) durch die Karte (302) zuzulassen, wenn die Karte (302) in einer richtigen Ausrichtung eingeführt wird, wodurch ein vollständiges Einführen der Karte (302) zugelassen wird.

2. Der Schlitz-Mechanismus (300) gemäß Anspruch 1, der weiter aufweist:
einen ersten Verriegelungsstift (318a), der sich an einer Vorderseite des Schlitzes (306) befindet, einen zweiten Verriegelungsstift (318b), der sich an einer Rückseite des Schlitzes befindet, und einen dritten Verriegelungsstift (318c), der sich außerhalb des Schlitzes (306) befindet, wobei der zweite und der dritte Verriegelungsstift (318b, 318c) mit dem ersten Verriegelungsstift (318a) mechanisch in Eingriff sind;
wobei der erste Verriegelungsstift (318a) konfiguriert ist, aus einer anfänglichen freigegebenen Position durch Einführen der Karte (302) gedrückt zu werden derart, dass das Drücken des ersten Verriegelungsstifts (318a) auch ein Drücken der zweiten und dritten Verriegelungsstifte (318b, 318c) aus der freigegebenen Position veranlasst;
wobei bei einem erfolgreichen vollständigen Einführen der Karte (302) in den Schlitz (306) veranlasst wird, dass die ersten, zweiten und dritten Verriegelungsstifte (318a, 318b, 318c) in die freigegebene Position zurückkehren, wodurch verhindert wird, dass der Kartenfreigabemechanismus (312) die Karte ausgibt.

3. Der Schlitz-Mechanismus (300) gemäß Anspruch 1 oder 2, wobei der Kartenfreigabemechanismus (312) derart konfiguriert ist, dass ein Anschnittteil (304) der Karte (302) mit dem Vorsprung (308) ausgerichtet ist, wenn die Karte (302) richtig eingeführt wird, wodurch eine Vorderkante der Karte (302) den ersten Arm (313) kontaktiert und den zweiten Arm (314) weg von dem Vorsprung (308) bewegt, wodurch der Vorsprung (308) durch die Karte (302) auf schwenkende Weise aus dem Schlitz (306) heraus bewegt werden kann.

4. Der Schlitz-Mechanismus (300) gemäß Anspruch 3, wobei der Kartenfreigabemechanismus (312) derart konfiguriert ist, dass der Anschnittteil (304) der Karte (302) nicht mit dem Vorsprung (308) ausgerichtet ist, wenn die Karte (302) falsch eingeführt wird, wodurch verhindert wird, dass eine Vorderkante der Karte (302) den ersten Arm (313) kontaktiert und den zweiten Arm (314) weg von dem Vorsprung (308) bewegt, wodurch wiederum verhindert wird, dass der Vorsprung (308) durch die Karte (302) auf schwenkende Weise aus dem Schlitz (306) heraus bewegt wird.

5. Der Schlitz-Mechanismus (300) gemäß einem der Ansprüche 1 bis 4, der weiter einen Freigabeknopf (324) aufweist, der mit den ersten, zweiten und dritten Verriegelungsstiften (318a, 318b, 318c) derart in Eingriff ist, dass ein Drücken des Freigabeknopfs (324) ein Drücken der ersten, zweiten und dritten Verriegelungsstifte (318a, 318b, 318c) veranlasst, und den Kartenfreigabemechanismus (312) veranlasst, die Karte (302) auszugeben.

6. Der Schlitz-Mechanismus (300) gemäß Anspruch 5, wobei während des Ausgebens der Karte (302) veranlasst wird, dass der schwenkend bewegbare Vorsprung (308) zurück in den Schlitz (306) geht.

7. Der Schlitz-Mechanismus (300) gemäß einem der Ansprüche 1 bis 6, wobei der Schlitz (306) geformt ist, ein richtiges Einführen der Karte (302) in einer Hochformat-Ausrichtung aufzunehmen.

8. Der Schlitz-Mechanismus (300) gemäß einem der Ansprüche 1 bis 6, wobei der Schlitz (306) geformt ist, ein richtiges Einführen der Karte (302) in einer Querformat-Ausrichtung aufzunehmen.

9. Der Schlitz-Mechanismus (500) gemäß Anspruch 8, der weiter aufweist:
eine erste Reihe (519) von Stiften, die sich an einer Vorderseite des Schlitzes (506) befindet; und
eine zweite Reihe (519') von Stiften, die sich hinter der ersten Reihe (519) von Stiften befindet, wobei die zweite Reihe (519') von Stiften konfiguriert ist, gesperrt zu sein, bis veranlasst ist, dass jeder der ersten Reihe 519300) von Stiften gedrückt ist.

10. Der Schlitz-Mechanismus (300) gemäß Anspruch 9, wobei ein unzulässiges Einführen der Karte (502) in einer Hochformat-Ausrichtung ein gleichzeitiges Drücken von jedem der ersten Reihe (519) von Stiften verhindert derart, dass verhindert wird, dass die Karte (502) über die zweite Reihe (519') von Stiften hinaus geht.

11. Eine elektronische Vorrichtung (100), die aufweist:
ein Gehäuse (102); und
den Schlitz-Mechanismus (300, 500) gemäß einem der Ansprüche 1-10, der innerhalb des Gehäuses (102) angeordnet ist.

## Revendications

1. Mécanisme d'encoche (300) pour un dispositif électronique (100), adapté de façon à recevoir une carte (302) à l'intérieur de celui-ci, le mécanisme d'encoche (300) comprenant :
une encoche (306) disposée à l'intérieur du dispositif électronique (300) ;
**caractérisé en ce que** le mécanisme d'encoche (300) comprend :
une patte mobile de façon à pouvoir pivoter (308), qui est sollicitée par ressort de façon à faire saillie à l'intérieur de l'encoche (306) ; et
un mécanisme de libération de carte sollicité par ressort (312), comprenant un premier bras (313) disposé à l'intérieur de l'encoche (306) et un deuxième bras (314) disposé à l'extérieur de l'encoche (306) ;
dans lequel le deuxième bras (314) est configuré de façon à empêcher un déplacement de la patte mobile de façon à pouvoir pivoter (308) par la carte (302) lorsque la carte (302) est insérée selon une orientation incorrecte, de façon à empêcher ainsi une insertion complète de la carte (302), et dans lequel le premier bras (313) est configuré de façon à permettre un déplacement de la patte mobile de façon à pouvoir pivoter (308) par la carte (302) lorsque la carte (302) est insérée selon une orientation correcte, de façon à permettre ainsi une insertion complète de la carte (302).

2. Mécanisme d'encoche (300) selon la revendication 1, comprenant de plus :
une première broche de verrouillage (318a) disposée à l'avant de l'encoche (306), une deuxième broche de verrouillage (318b) disposée à l'arrière de l'encoche, et une troisième broche de verrouillage (318c) disposée à l'extérieur de l'encoche (306), les deuxième et troisième broches de verrouillage (318b, 318c) étant mutuellement verrouillées mécaniquement avec la première broche de verrouillage (318a) ;
la première broche de verrouillage (318a) étant configurée de façon à être enfoncée à partir d'une position relâchée initiale par l'insertion de la carte (302), de telle sorte qu'un enfoncement de la première broche de verrouillage (318a) provoque également un enfoncement des deuxième et troisième broches de verrouillage (318b, 318c) à partir de la position relâchée ;
dans lequel, lors de l'insertion complète réussie de la carte (302) dans l'encoche (306), les première, deuxième et troisième broches de verrouillage (318a, 318b, 318c) sont amenées à être remises dans la position relâchée, de façon à empêcher ainsi le mécanisme de libération de carte (312) d'éjecter la carte.

3. Mécanisme d'encoche (300) selon la revendication 1 ou 2, dans lequel le mécanisme de libération de carte (312) est configuré de telle sorte qu'une partie d'encoche (304) de la carte (302) s'aligne avec la patte (308) lorsque la carte (302) est insérée correctement, de façon à amener ainsi un bord avant de la carte (302) à venir en prise avec le premier bras (313) et à éloigner ainsi le deuxième bras (314) de la patte (308), permettant à la patte (308) d'être déplacée de façon à pivoter hors de l'encoche par la carte (302).

4. Mécanisme d'encoche (300) selon la revendication 3, dans lequel le mécanisme de libération de carte (312) est configuré de telle sorte que la partie d'encoche (304) de la carte (302) n'arrive pas à s'aligner avec la patte (308) lorsque la carte (302) est insérée de façon incorrecte, de façon à empêcher ainsi un bord avant de la carte (302) de venir en prise avec le premier bras (313) et à éloigner ainsi le deuxième bras (314) de la patte (308), ceci empêchant alors la patte (308) d'être déplacée de façon à pivoter hors de la fente (306) par la carte (302).

5. Mécanisme d'encoche (300) selon l'une quelconque des revendications 1 à 4, comprenant de plus un bouton de libération (324) mutuellement verrouillé avec les première, deuxième et troisième broches de verrouillage (318a, 318b, 318c), de telle sorte que l'enfoncement du bouton de libération (324) provoque l'enfoncement des première, deuxième et troisième broches de verrouillage (318a, 318b, 318c), et provoque l'éjection de la carte (302) par le mécanisme de libération de carte (312).

6. Mécanisme d'encoche (300) selon la revendication 5, dans lequel, durant l'éjection de la carte (302), la patte mobile de façon à pouvoir pivoter (308) est amenée à revenir dans l'encoche (306).

7. Mécanisme d'encoche (300) selon l'une quelconque des revendications 1 à 6, dans lequel l'encoche (306) est formée de façon à recevoir une insertion correcte de la carte (302) selon une orientation de portrait.

8. Mécanisme d'encoche (300) selon l'une quelconque des revendications 1 à 6, dans lequel l'encoche (306) est formée de façon à recevoir une insertion correcte de la carte (302) selon une orientation de paysage.

9. Mécanisme d'encoche (500) selon la revendication 8, comprenant de plus :
une première rangée (519) de broches disposées à l'avant de l'encoche (506) ; et
une deuxième rangée (519') de broches disposées derrière la première rangée (519) de broches, la deuxième rangée (519') de broches étant configurée de façon à être verrouillée jusqu'à ce que chacune de la première rangée (519) de broches soit amenée à être enfoncée.

10. Mécanisme d'encoche (300) selon la revendication 9, dans lequel une insertion incorrecte de la carte (502) selon une orientation de portrait empêche un enfoncement simultané de chacune de la première rangée (519) de broches, de telle sorte que la carte (502) soit empêchée d'avancer au-delà de la deuxième rangée (519') de broches.

11. Dispositif électronique (100), comprenant :
un boîtier (102) ; et
le mécanisme d'encoche (300, 500) selon l'une quelconque des revendications 1 à 10, disposé à l'intérieur du boîtier (102).
